# EUROPÄISCHE PATENTSCHRIFT

(11) **EP 3 519 200 B1**
(45) Veröffentlichungstag und Bekanntmachung des Hinweises auf die Patenterteilung: **01.04.2020**
(21) Anmeldenummer: 17791537.8
(22) Anmeldetag: 18.09.2017
(51) Int. Cl.: B41K 1/40, B41K 1/42

(54) **VERFAHREN ZUM ERZEUGEN EINES STEMPELABDRUCK MIT UV-AUSHÄRTBARER FARBE MIT EINEM VORZUGSWEISE SELBSTFÄRBENDEN STEMPEL UND STEMPEL HIERFÜR**
METHOD FOR PRODUCING A STAMP IMPRESSION WITH A UV-CURABLE INK WITH A PREFERABLY SELF-INKING STAMP AND STAMP THEREFOR
PROCÉDÉ PERMETTANT DE PRODUIRE UNE MARQUE DE TAMPON À L'AIDE D'UNE ENCRE DURCISSABLE PAR UV AU MOYEN D'UN TAMPON DE PRÉFÉRENCE AUTOENCREUR ET TAMPON À CET EFFET

(30) Priorität: 30.09.2016 AT 508802016
(43) Veröffentlichungstag der Anmeldung: 07.08.2019
(73) Patentinhaber: Trodat GmbH, 4600 Wels (AT)
(72) Erfinder: MARX, Christoph, 3400 Klosterneuburg (AT); LINDNER, Helmut, 4722 Peuerbach (AT); ZINDL, Peter, 4614 Marchtrenk (AT)
(86) Internationale Anmeldenummer: PCT/AT2017/060234
(87) Internationale Veröffentlichungsnummer: WO 2018/058160

(56) Entgegenhaltungen:
- DE-U1-202011 103 397
- US-A- 5 827 134

## Beschreibung

Die Erfindung betrifft eine Verfahren zum Erzeugen eines Stempelabdruck mit Uv-aushärtbarer Farbe mit einem vorzugsweise selbstfärbenden Stempel und einen Stempel, wie sie in den Oberbegriffen der Ansprüche 1, 14 und 16 beschrieben sind.

Aus der US 5 827 134 A ist Verfahren bekannt, bei dem ein Stempelabdruck mit einer uv-aushärtbarer Farbe auf einen Golfball aufgebracht wird. Anschließend wird der Golfball in eine Bestrahlungsgerät eingelegt und mit UV-Strahlen bestrahlt, um die Farbe auszuhärten. Nachteilig ist hierbei, dass nach dem Aufbringen des Stempels auf den Golfball dieser erst in ein entsprechendes Bestrahlungsgerät eingelegt werden muss, wodurch der Stempelabdruck verwischt werden kann.

Weiters ist aus der DE 20 2011 103397 U ein Stempel und ein Verfahren bekannt, bei dem über den Stempel ein mit UV-Farbe gebildeter Stempelabdruck erzeugt wird, wobei der Stempelabdruck erst mit UV-Licht sichtbar wird, wobei eine Aushärtung der Farbe nicht notwendig ist.

Aus der AT 009 206 U ist ein Stempel bekannt, bei dem zur Erhöhung der Fälschungssicherheit ein mit Farbei versetztes Stempelkissen eingesetzt wird, wobei eine oder mehrere verschiedene Farben vorgesehen sind, wobei zumindest eine UV-Farbe oder zumindest eine der Farben UV-Farbpartikeln enthält, welche nur bei Bestrahlung mit UV-Licht sichtbar sind.
Nachteilig ist hierbei, dass bei schwierigen Oberflächen, wie beispielsweise Glas, Metall, Aluminium, Karton, usw. der Stempelabdruck leicht verwischt werden kann.

Um das verwischen eines Stempelabdruckes zu vermeiden, ist aus der DE 7601070 U eine Vorrichtung zum Aushärten der Stempelfarbe eines Stempelabdruckes an einem Gegenstand bzw. Werkstück bekannt, bei dem in einem Gehäuse mit gelochten Bodenund Deckbleche eine Führungsschiene zur Aufnahme der zu bestrahlenden Lampe bzw. Werkstückes angeordnet ist, wobei in einem Abstand von etwa 30mm zum Aufdruck an der Lampe eine Halogenmetalldampflampe mit hohen UV-Anteil als UV-Strahlungsquelle angeordnet ist.

Nachteilig ist hierbei, dass dabei zuerst der Gegenstand bzw. das Werkstück, insbesondere die zu bestrahlende Lampe, mit einem Stempelabdruck versehen werden muss, worauf diese in die Vorrichtung zum Trocknen eingelegt werden kann. Dabei besteht jedoch die Gefahr, dass beim Einlegen der Stempelabdruck verwischt wird. Auch können nur kleinere Gegenstande in einer derartigen Vorrichtung eingelegt werden.

Die Aufgabe der Erfindung liegt darin, ein Verfahren zum Erzeugen eines Stempelabdrucks mit Uv-aushärtbarer Farbe mit einem vorzugsweise selbstfärbenden Stempel und einem Stempel zu schaffen, bei dem die obgenannten Nachteile ausgeräumt werden und einen schnelle Trocknung eines Stempelabdruckes auf den meisten Oberflächen und bei jeder Größe des Werkstückes möglich ist.

Die Aufgabe wird durch die Erfindung gelöst.

Die Aufgabe der Erfindung wird durch ein Verfahren zum Erzeugen eines Stempelabdruck mit aushärtbarer Farbe mit einem vorzugsweise selbstfärbenden Stempel gelöst, bei dem eine Steuerung aktiviert wird, wobei zum Aushärten der Farbe zumindest eine oder mehrere am Stempel angeordnete Strahlenquellen mit in Richtung einer Abdruckfläche ausgerichtete UV-Strahlen eingeschaltet wird bzw. werden.
Vorteilhaft ist hierbei, dass durch den Einsatz zusätzliche Komponenten für das Aushärten der Farbe sichergestellt wird, dass ein Verwischen des Stempelabdruckes vermieden wird. Insbesondere ist dies von Vorteil, wenn eine Farbe mit sehr langer Aushärtezeit verwendet wird, wobei die Aushärtezeit durch Verwendung bestimmter Bestrahlungsmöglichkeiten, wie insbesondere UV-Strahlen, die Aushärtezeit wesentlich verkürzt werden kann. Ein weiterer wesentlicher Vorteil liegt darin, dass bei dem erfindungsgemäßen Stempel sämtliche dazu notwendige Komponenten, wie beispielsweise Strahlenquelle, Steuerung und Energiequelle, im Stempel integriert sind somit der Nutzer keinerlei anderen Zusatzgeräte benötigt und betätigen muss. Dabei wird auch der übliche Stempelablauf durch einfaches Zusammendrücken des Stempels nicht verändert, sodass eine sehr einfaches Handling erzielt wird.

Von Vorteil sind die Maßnahmen, bei der die Steuerung vor oder während des Stempelvorgangs aktiviert, insbesondere eingeschaltet wird, wobei die Steuerung während oder unmittelbar nach dem Stempelvorgang zumindest eine oder mehrere in Richtung einer Abdruckfläche des Stempels ausgerichtete Strahlenquelle am Stempel, insbesondere im Innenraum, zum Aushärten der Farbe aktiviert, insbesondere einschaltet. Dadurch wird erreicht, dass in einem Arbeitsgang durch einfaches Betätigen des Stempel gleichzeitig die Steuerung eingeschaltet, der Stempelabdruck erzeugt und über die Strahlenquelle ausgehärtet wird, sodass bei Beendigung des Stempelvorgang der Nutzer den Stempel vorzugsweise ohne Wartezeit, entfernen kann, sodass sofort anschließend über den erzeugten Stempelabdruck gewischt bzw. gekratzt werden kann. Dieser Stempel mit vorzugsweise Uv-aushärtbarer Farbe wird bevorzugt auf schwer stempelbare Oberflächen, wie Glas, Metall, Aluminium, Karton, Holz, usw. verwendet, wobei der Stand der Technik hierzu Farben mit hoher Lösemittelkonzentration einsetzt, die nach dem Stempelvorgang verdampfen, wobei dazu jedoch eine Trocknungszeit von mehr als 5 bis 10 Sekunden benötigt wird.

Es sind die Maßnahmen von Vorteil, bei denen die Steuerung während der Rückstellung der Textplatte von der Stempelstellung in die Ruhestellung, insbesondere kurz vor dem Erreichen oder beim Erreichen der Ruhestellung, zumindest eine oder mehrere Strahlenquellen am Stempel aktiviert, insbesondere eingeschaltet, wird. Dadurch wird erreicht, dass sehr viel Energie des Energiespeichers eingespart werden kann, da die Strahlenquelle erst im Endstadium, also nach der Erzeugung des Stempelabdruckes, eingeschaltet wird und nicht bereits am Beginn des Stempelvorganges. Somit wird die Einsatzdauer eines derartigen Stempels mit deinem Ladezyklus des Energiespeichers wesentlich erhöht.

Vorteilhaft sind auch die Maßnahmen, bei dem die Abdruckeinheit und/oder die Textplatte derart ausgebildet wird, dass diese in der Ruhestellung ein mit vorzugsweise uv-uv-aushärtbarer Farbe getränktes Kissen des eingesetzten Stempelkissen abdeckt bzw. verschließt. Dadurch wird erreicht, dass bei der Aktivierung in der Rückstellbewegung die Textplatte das UV-Licht gegenüber dem Stempelkissen abschirmt, sodass ein ungewollten Aushärten der Farbe im Stempelkissen beispielsweise bei Verwendung eines um 180° schwenkbaren Selbstfärbe-Stempel vermieden wird.

Von Vorteil sind die Maßnahmen, bei dem die Strahlenquelle beim oder nach dem Stempelvorgang über eine Zeitdauer kleiner 2 Sekunden, vorzugsweise zwischen 0,5 und 0,1 Sekunden, aktiviert werden. Vorteilhaft ist dabei, dass dadurch ein hoher Sicherheitsaspekt für den Schutz der Augen gewährleistet ist, da die Einschaltzeit sehr kurz ist, sodass es zu keinen Verletzungen bei den Augen kommen kann. Dabei ist es auch möglich, dass beim Abheben des Stempels von der Oberfläche des zu stempelnden Gegenstandes, Werkstückes oder Dokumentes während eingeschalteter Leuchtquelle, diese sofort von der Steuerung deaktiviert werden, d.h., dass beim Abheben des Stempels das Auslösen unterbunden wird oder die eingeschalteten Leuchtquellen sofort deaktiviert werden, um ev. Schäden an Augen eines Benutzers oder einer in der Nähe befindlichen anderen Person zu vermeiden. Somit ist sichergestellt, dass ein hoher Sicherheitsaspekt für den Schutz von Augen gewährleistet ist.

Es sind die Maßnahmen von Vorteil, bei denen von der Steuerung eine Position der Textplatte oder der Oberteil und des Unterteils zueinander während des Stempelvorgangs detektiert wird, wobei insbesondere an bestimmten detektierten Positionen die Steuerung und/oder die Strahlenquellen aktiviert werden. Dadurch wird erreicht, dass exakt der Einschaltzeitpunkt für die Strahlenquelle ermittelt werden kann, unabhängig ob ein Nutzer mit langsamer oder schneller Geschwindigkeit einen Stempelvorgang durchführt. Gleichzeitig wird erheblich Energie eingespart, wenn die Aktivierung der Steuerung erst an einer bestimmten Position während des Stempelvorganges erfolgt, um eine möglichst lange Laufzeit mit einem Ladezyklus zu erreichen.

Vorteilhaft sind die Maßnahmen, bei denen die Detektierung der Textplatte oder der Oberteil und des Unterteils zueinander über eine integrierte Sensorik vorzugsweise kapazitiv Kondensatorplatten bzw. -Elemente oder über Kontaktelemente oder magnetischen Schaltelemente erfolgt. Dadurch wird eine berührungslose Erkennung und Aktivierung für die Steuerung und/oder Strahlenquelle durchgeführt bzw. ermöglicht, sodass das Handling beim Stempelvorgang nicht beeinflusst wird. Darüber hinaus kann damit variable der Einschaltzeitpunkt für die Steuerung und Leuchtquellen verändert werden, da in Abhängigkeit der Feldstärke die Aktivierung erfolgen kann.

Von Vorteil sind die Maßnahmen, bei denen die Textplatte über einen Wendemechanismus von 90° oder vorzugsweise 180° von der Ruhestellung in die Stempelstellung geschwenkt bzw. gedreht wird, und dass zur Aufnahme der UV-uv-aushärtbarer Farbe ein Stempelkissen eingesetzt wird, an dem die Textplatte in der Ruhestellung anliegt. Dadurch ist es möglich, dass ein handelsüblicher Stempel, wie in den nachfolgenden Ausführungsbeispielen gezeigt, eingesetzt werden. Gleichzeitig haben die Verwendung von sogenannten Selbstfärbestempeln, bei denen die Farbe durch Anliegen am Kissen des Stempelkissen aufgenommen wird, den großen Vorteil, dass die Abdruckeinheit bzw. die Textplatte selbst ab Abschirmung der Strahlung gegenüber der Farbe im Stempelkissen dient bzw. eingesetzt werden kann.

Es sind aber auch die Maßnahmen von Vorteil, bei denen eine oder mehrere Strahlenquellen im Bereich der Abdruckfläche des Stempels, insbesondere an einem Unterteil des Stempels, und/oder auf der Rückseite der Textplatte, insbesondere auf der in Richtung Aufstandsfläche ragenden Seite eines Textplattenhalters und/oder an dem Unterteil, insbesondere der Oberseite des Innenraumes, befestigt wird bzw. werden, wobei die Lichtausstrahlung in Richtung der Abdruckfläche, insbesondere im Innenraum des Unterteils des Stempels, ausgerichtet wird. Dadurch wird erreicht, dass die UV-Strahlen der Strahlenquellen immer in Richtung des erzeugten Abdruckes auf der Oberfläche des Gegenstandes bzw. Werkstückes oder Dokumentes ausgestrahlt werden, sodass diese beim Auftreffen auf die UV-Farbe den Aushärtevorgang vollflächig aktiviert und aushärtet.

Von Vorteil sind die Maßnahmen, dass je nach Größe der Textplatte die Anzahl der verwendete Strahlenquellen definiert werden, wobei hierzu deren technischen Daten berücksichtigt werden. Dadurch wird erreicht, dass eine vollflächige Bestrahlung der Abdruckfläche bei den unterschiedlichsten Stempelgrößen sichergestellt ist, da bei größeren Stempelflächen entsprechend mehr Strahlenquellen eingesetzt werden. Auch kann dabei auf die verwendeten Strahlenquellen, insbesondere LED' s Rücksicht genommen werden, da bei stärkeren LED' s weniger von diesen benötigt werden.

Vorteilhaft sind die Maßnahmen, bei denen die Steuerung nach einem Stempelvorgang innerhalb einer vorgebbaren Zeitdauer oder direkt beim Erlöschen der Strahlenquellen deaktiviert wird, wobei bei einem neuerlichen Stempelvorgang innerhalb der Zeitdauer zum Deaktivieren der Steuerung diese aktiviert bleibt. Dadurch wird erreicht, dass dadurch Energie eingespart werden kann.

Es sind aber auch die Maßnahmen von Vorteil, bei denen die Stempelkomponenten, insbesondere der Unterteil, als UV-Schutz gegen die Augen ausgebildet ist, wobei hierzu ein transparentes Sichtfenster oder bei transparenten Flächen diese als UVundurchlässige Material, insbesondere aus Polymethylmethacrylat oder Polyallyldiglycolcarbonat, usw., verwendet wird. Dadurch wird erreicht, dass durch die transparente Ausbildung eine optimale Positionierung des Stempels stattfinden kann, jedoch die Augen bzw. die Umgebung vom abgestrahlten UV-Strahlen geschützt werden.

Darüber sind die Maßnahmen von Vorteil, bei denen die Steuerung, die Energiequelle und zumindest eine oder mehrere Strahlenquellen eine Baueinheit bzw. Modul, insbesondere ein Nachrüstmodul, bilden, die an die Abdruckeinheit, insbesondere auf der gegenüberliegenden Seite der Textplatte, befestigt wird bzw. aufgesteckt wird. Dadurch wird erreicht, dass jederzeit ein standardisierter Stempel mit einem derartigen Modul ausgestattet werden kann bzw. bei nicht Verwendung dieses entfernt werden kann. Lediglich muss beim Einsatz eines derartigen Moduls noch das Stempelkissen ausgetauscht werden.

Die Aufgabe der Erfindung wird aber auch durch ein Verfahren zum Erzeugen eines Stempelabdruck mit uv-aushärtbarer Farbe gelöst, bei dem eine Steuerung aktiviert wird, wobei nach der Erzeugung des Stempelabdrucks der Stempel oder eine Zusatzkomponente des Stempels, insbesondere eine Verschlußkappe, mit daran angeordneten Leuchtquellen manuell zum Stempelabdruck ausgerichtet wird und die Leuchtquellen zum Bestrahlen des Stempelabdruckes aktiviert werden.
Vorteilhaft ist dabei, dass bei einer derartigen Lösung wiederum alle Komponente am Stempel oder dessen Zubehör untergebracht sind, also keine zusätzlichen Geräte benötigt werden, und der Nutzer lediglich den Stempel bzw. die Zusatzkomponenten zum Abdruck manuell ausrichten muss, um diesen durch Aktivieren der Leuchtquellen zum Aushärten zu bringen. Damit wird in vorteilhafter weise erreicht, dass auch Stempel verwendet werden, bei denen eine Abschirmung des Farbspeichers, wie dies beispielsweise bei Flash-Stempel der Fall ist, eingesetzt werden können, da dies einfach seitlich oder umgedreht werden müssen, sodass die Strahlen der Strahlenquellen nicht an den Farbspeicher gelangen können. Es muss nämlich bei derartigen Stempel mit aus Strahlung, vorzugsweise UV-Strahlung, uv-aushärtbarer Farbe sichergestellt werden, das die Strahlen nicht in den Farbspeicher bzw. Stempelkissen gelangen, da ansonst die Farbe im Stempelkissen bzw. Farbspeicher selbst ausgehärtet wird und somit das Stempelkissen bzw. der Farbspeicher unbrauchbar ist.

Es sind aber auch die Maßnahmen von Vorteil, bei denen die Strahlenquelle über eine Zeitdauer kleiner 2 Sekunden, vorzugsweise zwischen 0,5 und 0,1 Sekunden, aktiviert werden. Dadurch wird erreicht, dass eine sehr kurze Verweildauer bzw. Ausrichtung notwendig ist und somit die Gefahr des Verwischen des Stempelabdruckes reduziert wird.

Weiters wird die Aufgabe der Erfindung aber auch durch einen Stempel gelöst, bei dem in bzw. an der Stempelkomponente eine Steuerung mit daran verbundener Energiequelle, insbesondere eine wiederaufladbare Knopfzelle oder Akku, angeordnet ist, die über Leitungen mit zumindest einer oder mehreren an der Stempelkomponente angeordnete Strahlenquellen verbunden ist.
Vorteilhaft ist hierbei, dass durch die Leitungsverbindung der Steuerung mit der Leuchtquelle am Stempel diese einfach zum Aushärten des Stempelabdruckes aktiviert werden kann. Dabei ist eine Aktivierung vor oder während oder nach dem Stempelvorgang möglich. Hierbei ist es auch möglich, dass die Aktivierung manuell beispielsweise über einen Taster erfolgt und die Steuerung entsprechen die benötigte Zeitdauer zum vollständigen aushärten der Farbe die Leuchtquelle aktiviert. Bei einem automatischen Vorgang wird vorzugsweise die Steuerung selbstständig aktiviert, sodass diese in einer bestimmten detektierten Stellung der Textplatte, insbesondere nach dem erzeugen des Stempelabdruckes, die Strahlenquellen für einen einstellbare Zeitdauer einschaltet bzw. aktiviert.

Von Vorteil sind die Ausbildungen, bei dem die Strahlenquellen derart angeordnet sind, dass deren UV-Strahlen in Richtung einer Abdruckfläche bzw. dem erzeugten Stempelabdruck ausgerichtet sind. Dadurch wird erreicht, dass in der Stempelstellung gleichzeitig der Aushärtevorgang über die Strahlen der Leuchtquellen erfolgt. Dadurch wird erreicht, dass in einem Arbeitsvorgang gleichzeitig der Stempelabdruck erzeugt und der Aushärteprozess ohne Veränderung der Lage des Stempel durchgeführt wird. Dabei kann durch entsprechende Dimensionierung und optimierter Anordnung der Strahlenquellen der Aushärteprozesse, also das Einschalten der Leuchtquellen, auf unterhalb von 2 Sekunden, insbesondre zwischen 0,5 und 0,1 Sekunden, vollzogen werden, sodass keine Verweilzeit nach dem Stempelvorgang notwendig ist.

Es ist auch eine Ausbildung von Vorteil, bei der die Strahlenquellen am Stempel vorzugsweise am Oberteil oder an den Seitenflächen zum manuellen Ausrichten zur Abdruckfläche angeordnet sind. Dadurch wird erreicht, dass auch andere Stempeltypen, wie beispielsweise Flash-Stempel, bei denen die Abdruckeinheit die Farbe nicht vor den Strahlen schützen kann, eingesetzt werden kann, da bei derartigen Stempel zuerst der Stempelabdruck erzeugt wird, anschließend der Stempel auf jene Seite gedreht wird, an der die Leuchtquellen angeordnet sind und diese über den Stempelabdruck gestellt bzw. gehalten wird, worauf die Leuchtquellen aktiviert werden, sodass der Stempelabdruck über die abgegebenen Strahlen ausgehärtet wird.

Von Vorteil ist eine Ausbildung, bei der die aushärtenbarer Farbe in einem auswechselbaren Stempelkissen, insbesondere in einem getränkten Kissen, angeordnet ist, wobei in der Ruheposition bei eingeschobenen Stempelkissen die Textplatte zur Aufnahme der aushärtenbarer Farbe am Kissen anliegt. Dadurch wird erreicht, dass nach jedem Stempelvorgang immer wieder neue Farbe aufgenommen wird und somit eine hohe Abdruckqualität erzielt wird. Gleichzeitig ist bei aufgebrauchter Farbe ein rascher Tausch des Stempelkissen möglich, sodass der Stempel schnell wieder einsetzbar ist.

Dabei ist auch eine Ausbildung von Vorteil, bei der die Textplatte bei einem Stempelvorgang zum Erzeugen des Stempelabdruckes in der Stempelposition die Abdruckeinheit mit der Textplatte über einen Wendemechanismus um in etwa 180° oder 90° von der Ruhestellung in die Stempelstellung verstellbar ist. Dadurch wird erreicht, dass aufgrund der Drehbewegung die Abdruckeinheit gleichzeitig zum Erzeugen des Stempelabdruckes und zur Abschirmung vor den Strahlen der Leuchtquellen gegenüber dem Stempelkissen dient.

Es ist aber auch eine Ausbildung von Vorteil, bei der auf einer Oberseite des Unterteil die Energiequelle und die Steuerung angeordnet sind, wobei die Strahlenquellen im Bereich einer Abdruckfläche bzw. Aufstandsfläche an einer oder mehreren Flächen des Unterteils befestigt sind, wobei die Strahlenquelle bzw. Strahlenquellen in Richtung eines Innenraums, insbesondere der Abdruckfläche ausgerichtet sind. Dadurch wird erreicht, dass die für die Aushärtung benötigten Komponente alle in einem Teil gebündelt sind, sodass lediglich bei diesem Teil ein erhöhter Herstellungsaufwand gegeben ist.

Von Vorteil ist eine Ausbildung, bei der zumindest eine oder mehrere Strahlenquellen auf der gegenüberliegenden Seite der Textplatte, insbesondere an der Abdruckeinheit bzw. Textplattenhalter, angeordnet ist, wobei die Steuerung und die Energiequelle ebenfalls an der Abdruckeinheit angeordnet sind. Dadurch wird erreicht, dass wiederum alle elektrischen Komponenten auf einem Teil, nämlich der Abdruckeinheit, angeordnet sind, sodass die Herstellung nur eines Teils aufwendiger ist. Gleichzeitig können kurze Leitungsverbindungen durch den kompakten Aufbau erreicht werden.

Vorteilhaft sind aber auch die Ausbildungen, bei der die einzelnen Komponenten für die Aushärtung der Farbe, insbesondere die Strahlenquellen, die Steuerung, die Energiequelle usw., in einem gemeinsamen Gehäuse zur Bildung eines Moduls angeordnet sind, welche auswechselbar mit der Abdruckeinheit verbindbar ist. Dadurch wird erreicht, dass eine einfach Nachrüstung oder Austausch möglich ist, sodass ein üblicher Stempel einfach auf einen Spezialstempel umgerüstet werden kann, indem das Modul an der Abdruckeinheit befestigt wird und ein entsprechend mit Farbe versehenes Stempelkissen eingesetzt wird.

Es ist aber auch eine Ausbildung von Vorteil, bei der über der oder den Strahlenquellen eine transparente auswechselbare Schutzabdeckung angeordnet ist, die vorzugsweise gleichzeitig als Linse, insbesondere Zerstreuungslinse, zur besseren Verteilung der UV-Strahlen im Innenraum ausgebildet ist. Dadurch wird erreicht, dass ein einfacher Schutz der Strahlenquellen erreicht wird, da bei Verschmutzung mit der uv-aushärtbarer Farbe und bei Aktivierung der Leuchtquelle, die Farbe sofort auf der Leuchtquelle aushärten würde und somit dies nicht mehr einfach entfernbar ist, sodass der Stempel meist unbrauchbar würde. Mit der Schutzabdeckung kann bei Verschmutzung dieser, die Schutzabdeckung einfach ausgetauscht werden, sodass der Stempel weiter verwendet werden kann.

Es ist auch eine Ausbildung von Vorteil, bei der zumindest eine oder mehrere Strahlenquellen auf der gegenüberliegenden Seite der Textplatte, insbesondere an der Abdruckeinheit bzw. Textplattenhalter, angeordnet ist, wobei die Steuerung und die Energiequelle am Oberteil oder Unterteil oder ebenfalls am Textplattenhalter angeordnet sind. Dadurch wird erreicht, dass im Innenraum des Oberteils ausreichen Platz zur Aufnahme der Komponenten vorhanden ist, sodass weitere Zusatzfunktionen, die im Unterteil nur schwer unterbringen sind, einfach miteingebaut werden können.

Schließlich ist auch eine Ausbildung von Vorteil, bei der die Strahlenquelle im Oberteil und/oder Unterteil angeordnet sind, wobei zum Bestrahlen des Stempelabdruckes Leitelemente insbesondere Lichtleiter, Spiegelsystem, die die abgegebenen Strahlen, insbesondere UV-Strahlen, in Richtung Abdruckfläche umlenken, angeordnet sind. Dadurch wird erreicht, das die Strahlenquelle an jenem Platz positioniert wird, wo ausreichend Raum zur Verfügung steht, da durch die Weiterleitung der Strahlen die Strahlenquelle nicht direkt im Sachbereich zur Abdruckfläche angeordnet sein muss. Eine derartige indirekte Beleuchtung bzw. Bestrahlung hat noch den weiteren Vorteil, dass dadurch eine einfach Zugänglichkeit zu den Strahlenquellen ermöglicht werden kann, da diese beispielsweise über eine Kappe von außen jederzeit erreichbar sind.

Es wird darauf hingewiesen, dass die Vorteile untereinander kombinierbar sind, sodass nicht immer alle Vorteil angeführt wurden, um ein oftmaliges Wiederholen zu vermeiden.

Die Erfindung wird anschließend in Form von Ausführungsbeispielen beschrieben, wobei darauf hingewiesen wird, dass die Erfindung nicht auf die dargestellten und beschriebenen Ausführungsbeispiele bzw. Lösungen begrenzt ist.

Es zeigen:
- Fig.1: eine Schrägansicht eines Stempel, insbesondere eines Kontrollstempel, von außen in einer Ruhestellung; in vereinfachter, schematischer Darstellung;
- Fig. 2: eine Schnittdarstellung in Querrichtung des Stempel, insbesondere des Kontrollstempel, nach Fig. 1 in der Ruhestellung, in vereinfachter, schematischer Darstellung;
- Fig. 3: eine Schnittdarstellung in Längsrichtung des Stempel, insbesondere des Kontrollstempel, nach Fig. 1 in der Ruhestellung, in vereinfachter, schematischer Darstellung;
- Fig. 4: eine schaubildliche Darstellung , in vereinfachter, schematischer Darstellung eines Stempels der Baureihe Printy P4 des Herstellers mit geänderter Anordnung der Strahlenquellen;
- Fig. 5: eine Schnittdarstellung des Stempels nach Fig. 4, in vereinfachter, schematischer Darstellung;
- Fig. 6: eine weiteres Ausführungsbeispiels eines Stempels mit einem 90° Wendemechanismus und geänderter Anordnung der Strahlenquellen, in vereinfachter, schematischer Darstellung;
- Fig. 7: eine Schnittdarstellung des Stempels nach Fig. 6, in vereinfachter, schematischer Darstellung;
- Fig. 8: eine schaubildliche Darstellung eines weiteren Ausführungsbeispiel eines Printy P4 4912 Stempels mit getrennt angeordneten Komponenten für die uv-uv-aushärtbare Farbe, in vereinfachter, schematischer Darstellung;
- Fig. 9: ein Längsschnittdarstellung des Stempels 1 nach Fig. 8, in vereinfachter, schematischer Darstellung;
- Fig. 10: eine weitere Schnittdarstellung des Stempels in Querrichtung nach Fig. 8, in vereinfachter, schematischer Darstellung;
- Fig. 11: ein weiteres Ausführungsbeispiel eines Stempels, bei dem die Strahlenquelle an der Außenfläche des Stempels angeordnet sind, sodass der Stempel manuell ausgerichtet werden muss, in vereinfachter, schematischer Darstellung;
- Fig. 12: den Stempel nach Fig. 11 in zum Stempelabdruck 2 ausgerichteter Stellung, in vereinfachter, schematischer Darstellung;
- Fig. 13: eine Verschlußkappe für die Stempel gemäß der Fig. 1 bis 12 mit integrierten Strahlenquelle, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

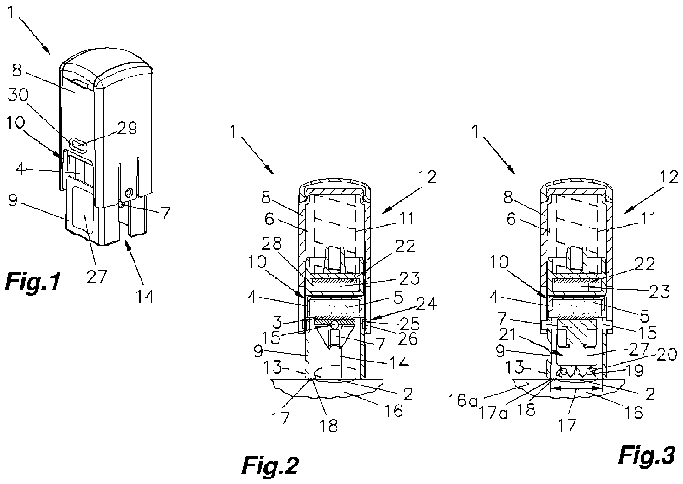

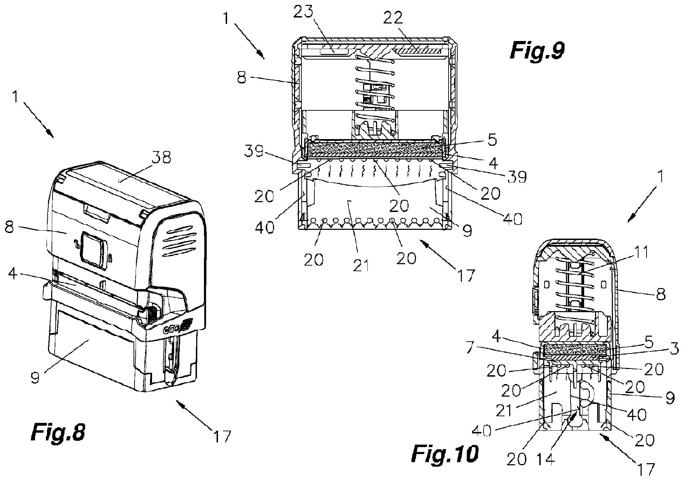

In den Fig. 1 bis 3 ist ein Ausführungsbeispiel eines Stempel 1, insbesondere eines Kontrollstempels, der beispielsweise als Stempelabdruck 2 einen QR-Abdruck, persönlich Zeichen, Strich-Codes usw., gezeigt, wobei vorzugsweise die Stempelfläche, insbesondere die Größe der Textplatte, zwischen 1cm x 1cm bis 4cm x 4cm aufweist. Selbstverständlich ist es möglich, dass auch kleinere oder größere Stempelflächen und auch andere Formen, wie beispielsweise rechteckig, rund, oval, dreieckig, usw. verwendet werden können. Auch ist es möglich, dass die Ausbildungen in den einzelnen Ausführungsbeispielen der Fig. 1 bis 12 untereinander kombiniert oder ausgetäuscht werden können.

Bei dem gezeigten Stempel 1 handelt sich um einen sogenannten Selbstfärber Stempel 1, bei dem eine Textplatte 3 mit dem negativen Stempelabdruck 2 an einem Stempelkissen 4, insbesondere einem mit uv-aushärtbarer Farbe 5 getränkten Kissen, zur Aufnahme der Farbe 5 anliegt.

Der Stempel 1 ist aus Stempelkomponente 6 und einer Abdruckeinheit 7 mit daran befestigter, insbesondere geklebter Textplatte 3 gebildet. Die Stempelkomponente 6 besteht zumindest aus einem Oberteil 8 und einem Unterteil 9 mit einem Kissenaufnahmeelement 10. Der Oberteil 8 ist kappenartig ausgebildet und umschließt den Unterteil 9, wobei zwischen dem Oberteil 8 und Unterteil 9 ein Federelement 11, wie strichliert schematisch dargestellt, angeordnet ist, sodass beim Betätigen des Stempels 1 der Oberteil 8 von einer Ruheposition 12 über den Unterteil 9 in eine Stempelstellung 13, wie schematisch strichliert angedeutet, geschoben wird und anschließend über das Federelement 11 wieder in die Ruheposition 12 zurück gestellt wird, also der Stempel 1 sozusagen zusammen gedrückt wird, um einen positiven Stempelabdruck 2 zu erzeugen.

Die Abdruckeinheit 3 ist über einen um 180° ausgebildeten Wendemechanismus 14, im Unterteil 9 bewegungsverbunden über eine Achse 15 bzw. Achszapfen 15 mit dem Oberteil 8 verbunden, sodass sich die Abdruckeinheit 7, wie aus dem Stand der Technik bekannt, im Unterteil 9 von der Ruheposition 12, gemäß den Fig. 1 bis 3 in vollen Linien, in die Druck- bzw. Stempelposition 13 (wie strichliert in den Fig. 2 und 3 angedeutet) durch Druckbeaufschlagung bewegen kann. Dabei wird bei einem Stempelvorgang der Stempel 1 auf einem Gegenstand 16, Dokumente 16, oder Werkstück 16, insbesondere mit glatter schwer stempelbarer Oberfläche 16a, über die Abdruckfläche 17 bzw. Aufstandsfläche 17a, die bevorzugt mit Rutschsicherungen 18 ausgestattet ist, aufgesetzt und ein Stempelvorgang durchgeführt, sodass der Stempelabdruck 2, wie schematisch dargestellt, am Gegenstand 16, Dokumente 16, oder Werkstück 16 erzeugt wird.

Da dieser Stempel 1 für schwer stempelbare Oberflächen, wie Glas, Metall, insbesondere Stahl, Aluminium, Magnesium, Kunststoffe, usw. ausgelegt ist, ist das Stempelkissen 4 mit Uv-aushärtbarer Farbe 5 gefüllt bzw. getränkt, wobei diese Farbe 5 über UV-Strahlen 19 von zumindest einer oder mehreren Leuchtquellen 20, aktiviert und ausgehärtet wird. Dabei sind die einen oder mehreren Strahlenquelle 20 derart im Stempel 1 angeordnet, dass deren UV-Strahlen 19 in Richtung der Abdruckfläche 17 bzw. dem erzeugten Stempelabdruck 2 ausgerichtet sind. Bei dem gezeigten Ausführungsbeispiel der Fig. 1 bis 3 sind insgesamt sechs Strahlenquellen 20 (siehe Fig. 3) angeordnet, wobei dieser im Unterteil 9, insbesondere im Bereich der Aufstandsfläche 17a bzw. Abdruckfläche 17 angeordnet sind und in einem Innenraum 21 des Unterteils 9 bei Aktivierung leuchten. Um die Leuchtkraft im Innenraum 21 zu erhöhen bzw. die UV-Strahlen 19 in Richtung Stempelabdruck 2 zu lenken, ist es möglich, dass Innenflächen des Unterteils 9 und/oder der Abdruckeinheit 7 mit einer Reflexionsschicht und/oder Reflexionsfolie (nicht dargestellt) versehen sind, sodass die von der Strahlenquelle 20 in entgegen des Stempelabdruck 2 bzw. Abdruckfläche 17 ausgestrahlten UV-Strahlen 19 an diesen Flächen reflektiert werden, sodass die am Stempelabdruck 2 auftreffenden UV-Strahlen 19 erhöht werden.

Damit jedoch die Strahlenquellen 20 aktiviert werden können, ist es erforderlich, dass eine entsprechende Steuerung 22 bzw. Steuerelektronik und Energiequelle 23 im Stempel 1 angeordnet sind, wobei die einzelnen Komponenten, insbesondere die Strahlenquellen 20, Steuerung 22 und Energiequelle 23, über Leitungen, die nicht dargestellt wurden, da diese in den Teilen des Stempels 1 integriert sind, miteinander verbunden sind. Der Ordnungshalber wird darauf hingewiesen, dass die Leitungen und weitere Komponente bereits bei der Herstellung in einem Spritzgussverfahren mit eingespritzt bzw. eingebettet werden können.

Erfindungsgemäß ist es somit möglich, dass in einem einzigen Arbeitsschritt, insbesondere einem einzigen Stempelvorgang, ein Stempelabdruck 2 aus einer UV-uv-aushärtbarer Farbe 5 erzeugt und mit UV-Strahlen 19 von Strahlenquellen 20 ausgehärtet werden. D.h., dass zum Erzeugen des Stempelabdrucks 2 mit Uv-aushärtbarer Farbe 5 mit einem vorzugsweise selbstfärbenden Stempel 1 die Textplatte 3 mit dem negativen Stempelabdruck 2 von einer Ruhestellung 12 in eine Stempelstellung 13 bewegt wird, wodurch in der Stempelstellung 13 der Stempelabdruck 2 mit der Uv-aushärtbarer Farbe 5, die von der Textplatte 3 vom Stempelkissen 4 aufgenommen wurde, auf einer vorzugsweise glatten Oberfläche 16a des Gegenstandes 16 oder Werkstückes 16 oder Dokumentes 16 erzeugt wird, und anschließend die Textplatte 3 wieder in die Ruhestellung 12 zurück gestellt wird, wobei die Steuerung 22 aktiviert wird und zum Aushärten der Farbe zumindest eine oder mehrere am Stempel 1 angeordnete in Richtung einer Abdruckfläche 17 ausgerichteten Strahlenquellen 20 eingeschaltet werden.

Beispielsweise ist es möglich, dass am Stempel 1 ein Schaltelement (nicht dargestellt) zum manuellen Aktivieren der Steuerung 22 und ev. zum gleichzeitigen Aktivieren der Strahlenquelle 20, (hierzu kann jedoch ein eigenes Steuerelement angeordnet sein) angeordnet ist, sodass vorzugweise vor dem Stempelvorgang die Steuerung 22 über das Schaltelement aktiviert wird. Anschließend der Stempelabdruck 2 durch einen Stempelvorgang erzeugt wird, wobei der Stempel 1 nicht von der Position entfernt wird, sodass durch Aktivieren der Leuchtquellen 20 die UV-Strahlen 19 ausgestrahlt werden, woraufhin der Stempel 1 von der Position entfernt werden kann. Es ist aber auch möglich, dass das Schaltelement als Taster (nicht dargestellt) ausgebildet ist, sodass nach dem Erzeugen des Stempelabdruckes 2 durch Betätigen des Tasters die Steuerung 22 und die Strahlenquellen 20 aktiviert werden, sodass wiederum die Uv-aushärtbarer Farbe 5 über die UV-Strahlen 19 ausgehärtet wird. Nachteilig bei den beiden beschriebenen Abläufen ist, dass nach dem Stempelvorgang der Stempel 1 auf der Stempelposition belassen werden muss, um die Strahlenquellen 20 zum Aushärten zu aktivieren, sodass die UV-Strahlen 19 den noch feuchten und leicht verwischbaren Stempelabdruck 2 aushärten können. Dadurch können zwar sehr gute Abdruckergebnisse erzeugt werden, jedoch die benötigte Zeit für einen Stempelvorgang ist sehr lange. Auch besteht die Gefahr, dass nach dem Stempelvorgang durch verrücken des Stempels 1 der Stempelabdruck 2 durch die Rutschsicherungen 18 leicht verwischt bzw. zerstört werden kann.

Vorzugsweise ist bei dem erfindungsgemäßen Stempel 1 und dessen Verfahren vorgesehen, dass eine automatische bzw. selbstständige Erkennung eines möglichen Stempelvorganges vorgesehen ist, sodass die Steuerung 22 automatisch aktiviert wird und auch automatisch die Strahlenquelle 20 ein- und ausgeschaltet wird, worauf zum Energiesparen die Steuerung 22 immer möglichst kurz aktiviert wird, sodass einen hohe Stempelanzahl mit einer aufgeladenen Energiequelle 23 erzeugt werden kann. Vorzugsweise ist die Kapazität der Energiequelle 23 derart ausgelegt, dass bis zu 1000 Stempelabdrücke mit einer Ladung erzeugt werden können oder dass bei Verwendung im Schichtbetrieb eine Schicht mit einer Ladung auskommt, d.h., dass beispielsweise in der Autoindustrie der Sicherheitsstempel 1 am Beginn einer Arbeitsschicht von der Ladestation entnommen wird und anschließend über die gesamte Arbeitsschicht ausreichend Energie zur Verfügung hat.

Erfindungsgemäß ist vorgesehen, dass vor oder während des Stempelvorgangs die Steuerung 22 aktiviert, insbesondere eingeschaltet wird, wobei die Steuerung 22 während oder unmittelbar nach dem Stempelvorgang zumindest eine oder mehrere in Richtung einer Abdruckfläche 17 des Stempels 1 ausgerichtete Strahlenquelle 20 am Stempel 1 zum Aushärten der Farbe 5 aktiviert, insbesondere einschaltet, d.h., dass beim Aufsetzen des Stempels 1 am Gegenstand 16, Werkstück 16 bzw. Dokumentes 16 dies beispielsweise durch einen Berührungstaster (nicht dargestellt) oder durch eine kapazitive Sensorik 24 der mögliche Stempelvorgang erkannt wird, sodass die Steuerung 22 zum blitzschnellen Einschalten der Strahlenquellen 20 vorab aktiviert wird, worauf von Steuerung 22 überwacht wird, ob und wann ein Stempelvorgang durchgeführt wird, sodass zu einem bestimmten Zeitpunkt oder einer bestimmten Position der Textplatte 3 bzw. Abdruckeinheit 7 die Leuchtquellen 20 über eine einstellbare Zeitdauer aktiviert werden. Damit wird erreicht, dass der Nutzer, wie gewohnt, einen einfachen Stempelvorgang durchführt und nach abgeschlossen Stempelvorgang den Stempel 1 sofort wieder entfernen kann.

Bevorzugt wird während der Rückstellung der Textplatte 3 von der Stempelstellung 13 in die Ruhestellung 12, insbesondere kurz vor dem Erreichen oder beim Erreichen der Ruhestellung 12, zumindest eine oder mehrere der Strahlenquellen 20 am Stempel 1 aktiviert, insbesondere eingeschaltet, dadurch ist nämlich sichergestellt, dass bereits ein Stempelabdruck 2 erzeugt ist und somit nicht unnötig Energie verbraucht wird. Weiters wird dadurch erreicht, dass die Abdruckeinheit 7 mit der Textplatte 3 die UV-Strahlen 19 in Richtung Stempelkissen 4 abdecken, sodass eine ungewollte Aushärtung der Farbe 5 im Stempelkissen 4 vermieden wird. Somit ist es von Vorteil, wenn die Strahlenquelle 20 vorzugsweise erst unmittelbar vor Erreichen der Ruhestellung 12 oder beim oder kurz nach dem Erreichen der Ruhestellung 12 von der Steuerelektronik 22 mit Energie von der Energiequelle 23 versorgt wird. Die Position kann dabei beispielsweise über die kapazitive Sensorik 24, bei der im Unterteil 9 und im Oberteil 8 an der bestimmten Position ein kapazitives Element 25,26, insbesondere Kondensatorplatten, eingebettet ist, wobei zwischen den Elementen 25,26 ein kapazitives Feld aufgebaut wird, sodass sich das kapazitive Feld am Beginn des Stempelvorganges verringert, da der Oberteil 8 nach unten gedrückt wird, sodass die Steuerung 20 aktiviert wird und am Ende des Stempelvorganges das Feld wieder erhöht wird, sodass durch entsprechende Auswertung der Feldstärke exakt die Einschaltposition für die Leuchtquellen 20 ermittelt werden kann. Selbstverständlich ist es auch möglich, dass eine andere Art von Sensorik 24, beispielsweise mit Micro-Schaltern, Lichtschranken, Kontaktelementen, magnetische Schaltelemente, usw. verwendet werden kann.

Zum Aushärten der Farbe 5 wird also die Strahlenquelle 20 über eine definierte Zeitdauer, die an bzw. über die Steuerung 22 einstellbar ist, aktiviert, wobei diese Zeitdauer weit unterhalb der aus dem Stand der Technik bekannten Trocknungszeiten für Sicherheitsstempel, die beim Stand der Technik beginnend von 10 Sekunden bis einigen Minuten dauert, liegt. Erfindungsgemäß ist vorgesehen, dass die Strahlenquelle 20 beim oder nach dem Stempelvorgang über eine Zeitdauer kleiner 2 Sekunden, vorzugsweise zwischen 0,5 und 0,1 Sekunden, aktiviert werden, sodass die Strahlenquelle 20 bereits wieder deaktiviert ist, wenn der Stempel 1 vom Gegenstand 16 bzw. Werkstück 16 bzw. Dokument 16 abgehoben wird. Erst durch diese kurze Zeitdauer ist es möglich, dass ein derartiger Ablauf mit Stempeln und Aushärten in einem Arbeitsschritt und einem Gerät, nämlich vorzugsweise einen Handstempel 1, möglich ist. Damit jedoch so kurze Belichtungszeiten erreicht werden, ist es notwendig, dass ausreichend UV-Strahlen 19 auf den Stempelabdruck 2 einwirken, sodass vorzugsweise mehrere Strahlenquellen 20 eingesetzt werden. Dabei wird vorzugsweise für 0,5cm² bis 1cm² Stempelfläche eine oder zwei Strahlenquelle 20 eingesetzt, d.h., dass je größer die Stempelfläche des Stempel 1 ausgelegt ist, umso mehr Strahlenquellen 20 werden für die optimale Aushärtung benötigt und eingesetzt, wobei hierzu auf die Leistung der Strahlenquelle 20 berücksichtigt werden muss. Vorzugsweise werden nach dem heutigen Stand der Technik LED' s mit der Wellenlänge von 420nm bis 365nm verwendet.

Bei dem in den Fig. 1 bis 3 dargestellten Sicherheitsstempel 1 ist eine Stempelfläche von ca. 2cm² möglich, sodass sechs Strahlenquellen 20 bzw. sechs LED' s eingesetzt werden, um eine ausreichende Energiemenge bzw. Leuchtkraft in der kurzen Belichtungszeit bzw. Zeitdauer von kleiner 2 Sekunden, vorzugsweise zwischen 0,5 und 0,1 Sekunden, zu erreichen. Die Strahlenquellen 20 sind dabei im Unterteil 9 im Bereich der Aufstandsfläche 17a bzw. Abdruckfläche 17 angeordnet, wobei die Leuchtquellen 20 in Richtung Abdruckfläche 17 in den Innenraum 21 des Unterteils 9 strahlen. Dabei ist es möglich, dass zur Abschirmung vor den UV-Strahlen 19 die Seitenfläche des Unterteils 8 undurchsichtig ausgebildet sind, sodass keinerlei Strahlen aufgrund des Augenschutzes nach außen dringen kann. Dies ist bei derartigen Sicherheitstempel 1 möglich, da die Abdruckfläche 17 sehr klein gehalten wird und somit die Positionierung einfach ist. Selbstverständlich ist es auch möglich, dass zur verbesserten Positionierung ein transparentes Sichtfenster 27 angeordnet ist, sodass der Nutzer durch das Sichtfenster 27 in den Innenraum 21 blicken kann und somit eine exakte Ausrichtung möglich ist. Das Sichtfenster 27 wird dabei aus einem UV-undurchlässigen Material, insbesondere Kunststoff gebildet, sodass keinerlei UV-Strahlen 19 durch das Sichtfenster 19 nach außen dringen kann. Der Ordnungshalber wird darauf hingewiesen, dass anstelle eines Sichtfensters 27 ein Teil oder die gesamte Fläche des Unterteils 9 mit einem derartigen transparenten uv-undurchlässigen Material bzw. Kunststoff erzeugt werden kann.

Die Position der Steuerung 22 und der Energiequelle 23 ist bei diesem Ausführungsbeispiel ebenfalls am Unterteil 9, sodass sämtliche benötigte Leitungen nur im Unterteil 9 integriert sein müssen, sodass die Energieversorgung über die Leitungen durch keine beweglichen Abläufe bzw. Elemente behindert wird. Bevorzugt sind die Steuerung 22 und die Energiequelle 23 zwischen Federelement 11 und dem Stempelkissen 4 in einem dafür geschaffenen Freiraum 28 angeordnet. Es ist aber auch möglich, dass das Federelement 11 direkt auf einer Komponente aufliegt, sodass die Energiequelle 23 und die Steuerung 22 auf der Oberfläche des Unterteils 9 befestigt bzw. angeordnet ist. Selbstverständlich ist es auch möglich, dass die Steuerung 22 und die Energiequelle 23 im Innenraum 21 oberhalb des Stempelkissens 4 angeordnet ist. Auch ist es möglich, dass die Steuerung 22 und die Energiequelle 23 voneinander getrennt angeordnet sind, wobei beispielsweise die Steuerung 22 im Innenraum 21, vorzugsweise oberhalb des Stempelkissens 4, und die Energiequelle 23 auf der Oberfläche des Unterteils 9 bei dem Federelement 11 positioniert ist, sodass die Energiequelle einfach austauschbar ist.

Von Vorteil ist, wenn am Stempel 1 eine Schnittstelle 29, wie schematisch in Fig. 1 durch eine Öffnung 30 oder Aussparung im Oberteil 8 erreichbar ist, angeordnet ist, die mit der Steuerung 22 verbunden, sodass ein Datenaustausch vorzugsweise zum Einstellen der Steuerung 22, insbesondere der Zeitdauer bzw. Einschaltzeit für die Leuchtquellen 20, der Aktivierungszeitpunkt, usw., vorgenommen werden kann. Diese Schnittstelle 29 kann auch gleichzeitig für den Ladevorgang der Energiequelle 23 verwendet werden.

Weiters wird der ordnungshalber erwähnt, dass das Stempelkissen 4, wie aus dem Stand der Technik bekannt, einfach ausgetauscht werden kann, indem der Stempel 1 leicht zusammen gedrückt wird, sodass die Textplatte vom dem mit Uv-aushärtbarer Farbe 5 getränkten Kissen abhebt und anschließend das Stempelkissen 4 einfach nach außen gedrückt und entnommen werden kann. Ein einfacher Kissenwechsel ist sofern wichtig, da bei aufgebrauchter Farbe 5 diese wieder nachgetränkt werden kann oder dass ein bereits mit uv-aushärtbarer Farbe 5 vorgetränktes Ersatzkissen als neues Stempelkissen 4 eingesetzt wird, um rasch wieder mit einen einsetzbaren Stempel 1 zur Verfügung zu haben. Hierbei ist es von Vorteil, dass über die Steuerung 22 die einzelnen Stempelvorgänge, die aufgrund der Detektion über die Sensorik 24 erkannt werden, gezählt werden und bei Erreichen einer vordefinierbarer Stempelanzahl eine Information oder ein Warnton bzw. Signalton ausgesandt wird, sodass der Nutzer die Abdruckqualität überprüfen kann oder aufgrund von Qualitätsanforderungen das Stempelkissen 4 austauscht.

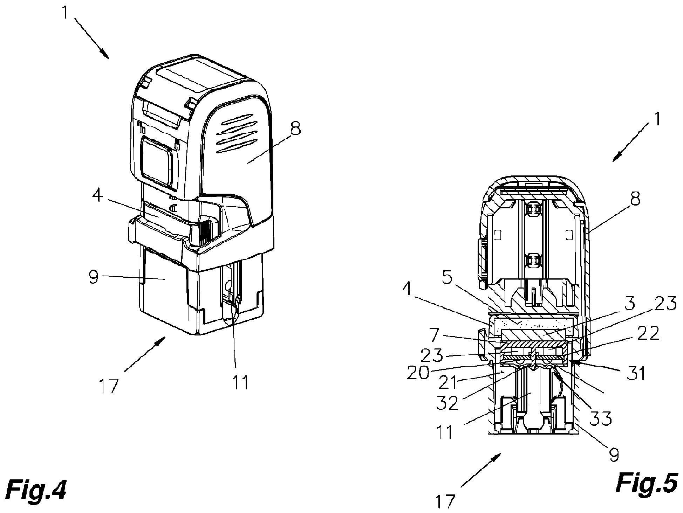

In den Fig. 4 und 5 ist ein weiteres Ausführungsbeispiels eines Stempels 1 mit uv-aushärtbarer Farbe 5 gezeigt. Dabei handelt es sich wiederum um einen sogenannten Selbstfärberstempel 1 der Baureihe Printy P4 des Anmelders. Der wesentliche Unterschied zu dem in den Fig. 1 bis 3 gezeigten Stempel der Baureihe Printy P2 des Anmelders liegt darin, dass die Stempelkissenentnahmen anders erfolgt, wo diese aus der WO 2011/020608 A bzw. der AT 507833 A und deren Familienmitglieder entnehmen kann, wobei der Aufbau im Wesentlichen gleich ist, nur die Baugröße, insbesondere die Größe der Textplatte 3 unterschiedlich ist, sodass nicht mehr näher auf den Aufbau eingegangen wird.

Durch den Einsatz der uv-aushärtbarer Farbe 5 ist es auch hier erforderlich, dass der Stempelabdruck 2 (nicht dargestellt) mit UV-Strahlen 19 von einer oder mehreren Strahlenquellen 20 bestrahlt werden müssen, um die Reaktion des Aushärtens auszulösen. Würde dies nämlich nicht erfolgen, so würde es sehr lange dauern, bis der Stempelabdruck 2 über die von der Sonne ausgestrahlten UV-Strahlen den Stempelabdruck 2 aushärten würde, sodass der Stempelabdruck 2 leicht verwischt bzw. entfernt werden kann.

Zum Unterschied des ersten Ausführungsbeispiels sind die Strahlenquellen 20 nunmehr an der Abdruckeinheit 7 angeordnet. Dabei sind die Strahlenquellen 20 auf der gegenüberliegenden Seite zur Textplatte 3 angeordnet, sodass diese in Richtung Abdruckfläche 17 ausgerichtet sind. Ebenso sind die Steuerung 22 und die Energiequelle 23 an der Abdruckeinheit 7 angeordnet. Dadurch ist es möglich, dass direkt an der Steuerung 22, insbesondere der Steuerungsplatine, die Leuchtquellen 20 verlötet sind, sodass keinerlei Leitungen außerhalb der Steuerung 22 nötig sind. Dabei kann auch die Energiequelle 23 direkt an der Steuerung, insbesondere auf der gegenüberliegenden Seite zu den Strahlenquellen 20 angeordnet sein. Man kann damit sagen, dass die Steuerung 22, die Energiequelle 23 und die Strahlenquellen 20 eine gemeinsame Baueinheit bzw. Modul 31 bilden, welches direkt an der Abdruckeinheit 7 befestigt ist. Dabei ist es auch möglich, dass durch den modulartigen Aufbau das Modul, bestehend aus der Steuerung 22, der Energiequelle 23 und den Strahlenquellen 20 in einem eigenständigen Gehäuse angeordnet sind, welches als Zusatzkomponente an der Abdruckeinheit beispielsweise über eine Rastverbindung aufgesteckt bzw. angeordnet wird bzw. ist. Somit kann ein handelsüblicher Stempel 1 mit einem derartigen Modul 31 jederzeit nachgerüstet werden, wobei hierzu noch zusätzlich ein entsprechend mit uv-aushärtbarer Farbe 5 getränktes Stempelkissen 4 eingesetzt werden muss.

Zum Schutz vor Verschmutzung ist es möglich, dass eine transparente auswechselbare Schutzabdeckung 32 angeordnet ist, die vorzugsweise gleichzeitig als Linse 33, insbesondere Zerstreuungslinse, zur besseren Verteilung der UV-Strahlen 19 im Innenraum 21 ausgebildet ist. Damit ist es nicht mehr möglich, dass bei einem Stempelvorgang, bei dem die Abdruckeinheit 7 über den Wendemechanismus um 180° gedreht wird, die Strahlenquellen 20 mit Farbe 5 verschmutzt werden können, die beim Aktivieren der Strahlenquellen 20 ja sofort aushärten würden und somit nicht mehr bzw. nur mehr sehr schwer von den Strahlenquellen entfernt werden. Wird hingegen die Schutzabdeckung 32 verschmutzt, so kann dieses jederzeit einfach ausgetauscht werden, da die Schutzabdeckung 32 einfach auf das Modul 31 bzw. die Abdeckeinheit 7 aufgeschnappt wird. Ein weiterer wesentlicher Vorteil liegt jedoch in der Funktion als Linse 33, da hier die UV-Strahlen 19 im Innenraum 21 des Unterteils 9 optimal verstreut werden kann.

Bei diesem Ausführungsbeispiel ist es von Vorteil, wenn die Schnittstelle 29 (nicht dargestellt) am Modul 1 angeordnet ist, sodass diese durch den Innenraum 21 kontaktierbar ist. Auch ist es möglich, dass zum Laden des Energiespeichers bzw. der Energiequelle 23 oder für den Datenaustausch das Modul 31 entnommen wird. Somit ist es möglich, dass ein anderes geladenes Zweit-Modul 31 verwendet wird und der Stempel 1 somit sofort wieder einsatzbereit ist. Auch ist bei diesem Ausführungsbeispiel wiederum vorgesehen, dass von der Steuerung 22 eine Position der Textplatte 3 während des Stempelvorgangs detektiert wird, wobei insbesondere an bestimmten detektierten Positionen die Steuerung 22 und/oder die Strahlenquellen 20 aktiviert werden, wie dies bereits im Ausführungsbeispiel der Fig. 1 bis 3 beschrieben ist und auf dieses Ausführungsbeispiel der Fig. 4 und 5 übertragen werden kann, sodass dies der

Übersichtshalber nicht mehr dargestellt wurde. Die Detektierung der Textplatte 3 bzw. der Abdruckeinheit 7 erfolgt wiederum vorzugsweise kapazitiv über integrierte Kondensatorplatten oder über Kontaktelemente oder magnetischen Schaltelemente.

Bei diesem Stempel 1 des Ausführungsbeispiel 4 und 5 kann wiederum eine Stempelfläche von ca. 2-3cm² mit einer entsprechenden Textplatte 3 erzeugt werden, wobei nunmehr nur 2 Strahlenquellen 20 eingesetzt werden, da die UV-Strahlen durch die Linse 33 verteilt werden. Der Ordnungshalber wird jedoch erwähnt, dass auch mehrere Strahlenquellen 20, beispielsweise vier oder sechs Strahlenquellen 20 in Form UV-LED' s, verwendet werden.

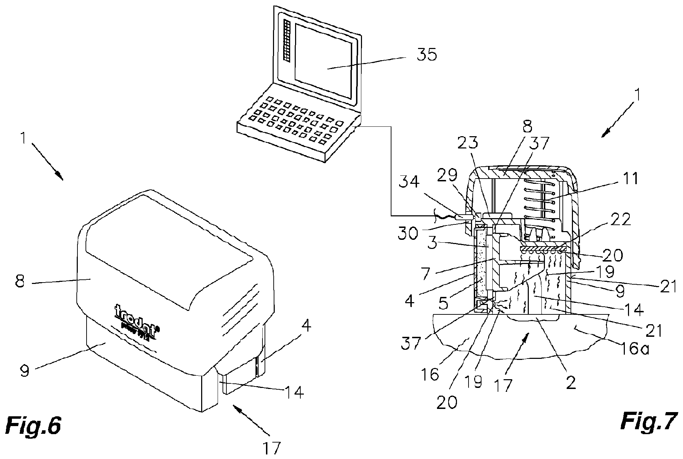

Im Ausführungsbeispiel der Fig. 6 bis 7 ist ein Stempel 1 mit einem 90°-Wendemechanismus 11 der Anmelderin beispielsweise mit der Markenbezeichnung "3912" basierend auf den Dokumenten WO2012/159728 A bzw. AT 511453 B, sodass auf den konkreten Aufbau nicht näher eingegangen wird, da diese aus den Druckschriften entnommen werden kann.

Der Stempel 1 ist dabei über ein Schnittstellenkabel 34 mit einer externen Komponente, insbesondere einem Computer 35 und/oder Ladegerät, zum Laden und zum Datenaustausch in der Ruhestellung 12 verbunden, wie dies in Fig. 7 schematisch dargestellt ist.

Bei dem Stempel 1 sind wiederum alle für den uv-aushärtbaren Prozess benötigten Komponenten, insbesondere die Strahlenquelle 20, die Steuerung 22, die Energiequelle 23, die Schnittstelle 29, usw., am Unterteil 9 angeordnet. Da jedoch bei dem gezeigten sogenannten 90°-Stempel 1 die Abdruckeinheit 7 im Winkel von 90° zur Abdruckfläche 17 bzw. dem Gegenstand 16, Werkstück 16 bzw. Dokument 16, in der Ruhestellung 12 angeordnet ist, entsteht im Innenraum 21 ausreichend Platz um die Strahlenquellen 2 zischen der Abdruckeinheit 7 und einer Vorderseite 36 des Stempels 1 anzuordnen. Damit kann in der Ruhestellung 12 oder unmittelbar davor bei Aktivieren der Strahlenquellen 20 die UV-Strahlen 19 ungehindert in Richtung Abdruckfläche 17 abgestrahlt werden, ohne dass diese von der Abdruckeinheit 7 behindert wird. Gleichzeitig dient die Abdruckeinheit 7 als Abdeckung für das Stempelkissen 4, insbesondere das mit Uv-aushärtbarer Farbe 5 getränkte Kissen im Stempelkissen4, sodass keinerlei UV-Strahlen 19 im Innenraum 21 auf das Stempelkissen 4 gelangen kann. Hierzu ist es möglich, dass an der Abdruckeinheit 7 oder am Stempelkissen 4 selbst Abdeckelemente 37, die bevorzugt elastisch Ausgebildet sind, sodass diese beim Auftreffen auf das Gehäuse leicht verformt werden können, angeordnet sind.

Ein weiterer Unterschied zu den zuvor beschriebenen Ausführungsbeispiel liegt darin, dass bei diesem Stempel 1 zusätzlich zu den an der Steuerung 22 angebrachten Leuchtquellen 20 noch zusätzliche Leuchtquellen 20 im Bereich der Abdruckfläche 17, wie schematisch unterhalb der Abdruckeinheit 7 angedeutet, angeordnet sind, sodass auf mehreren Positionen im Innenraum 21 zum besseren Ausleuchten der gesamten Abdruckfläche 17 die Leuchtquellen 20 verteilbar sind verteilt werden können.

In den Fig. 7 bis 9 ist ein weiteres Ausführungsbeispiel für die Anordnung der wesentlichen Komponenten in dem Stempel 1 gezeigt, wobei als Stempel 1 wiederum ein bekanntes Modell der Printy P4-Serie, nämlich eine P4 4912, der Anmelderin gezeigt ist. Der Aufbau des Stempels 1 kann aus den erteilten europäischen Patenten EP 2591921 B, EP2384283B, EP2591919 und der EP25991920B entnommen werden, sodass nicht mehr auf die Details eingegangen wird.

Bei diesem Aufbau sind nunmehr die einzelnen Komponenten, insbesondere die Leuchtquellen 20, die Steuerung 22, die Energiequelle 23, usw., voneinander getrennt angeordnet. Die Steuerung 22 und Energiequelle, sowie alles weiteren Teile, wie beispielsweise die Schnittstelle 29 (nicht dargestellt), sind im Oberteil 8 angeordnet, wogegen die Leuchtquellen 20 im Unterteil 9, insbesondere im Innenraum 21 des Unterteils 9, zum Bestrahlen der Abdruckfläche 17 angeordnet sind. Der Vorteil dieser Lösung liegt vor allem darin, dass dadurch eine wesentlich umfangreichere Steuerung 22 und größere Energiequelle 23 bzw. mehrere zusätzlicher Komponenten, wie die Schnittstelle, usw., einsetzbar sind, da viel mehr Platz vorhanden ist, als dies im Unterteil 9 möglich ist. Auch ist es möglich, dass durch Ausbildung eines sogenannten doppelten Bodens (nicht dargestellt) die Zugänglichkeit zu den elektrischen bzw. elektronischen Komponenten von außen ermöglicht werden kann. Es ist auch die Möglichkeit gegeben, dass die Steuerung 22, die Energiequelle 23 und weitere Komponenten, wie beispielsweise die Schnittstelle 29 auf der Außenseite des Oberteils 8, beispielsweise unterhalb der transparenten Fensterelement 38 zum Einlegen eines Musterabdruckes anzuordnen und die für die Ansteuerung und Energieversorgung der Leuchtquellen 20 benötigten Leitungen nach innen zu führen.

Damit jedoch bei einem derartigen Aufbau die Versorgung der Leuchtquellen 20 im Unterteil 9 stattfinden kann, muss eine elektrische Verbindung zwischen dem Oberteil 8 und dem Unterteil 9 aufgebaut werden. Dies kann beispielsweise durch Einsatz von leitenden Achsen 15 oder elektrisch leitenden Einsätze 39 im Bereich der Achsen 15 erfolgen, über die mit dem Wendemechanismus 14, insbesondere der Führungsnut, ein sogenannter Schleifkontakt 40 hergestellt wird, sodass die Energie vom Oberteil 8 über die Einsätze 39 des Schleifkontaktes 40 an den Unterteil 9 geleitet wird und somit die Leuchtquellen 20 mit Energie über eine definierte Zeitdauer zum Abstrahlen der UV-Strahlen 19 versorgt wird, wie dies schematisch dargestellt ist. Es wird jedoch auch darauf hingewiesen, dass flexible Leitungen zum Verbinden des Oberteils 8 mit dem Unterteil 9 verwendet werden können, die das Zusammenschieben bzw. Zusammendrücken der beide Teile ausgleichen können. Wesentlich ist, dass bei einer derartigen Ausbildung der Unterteil 9 in elektrischer Verbindung zum Übertragen der Energie mit dem Oberteil 8 ausgebildet ist, sodass ausreichend Energie den Leuchtquellen 20 im Unterteil 20 zur Verfügung gestellt wird.

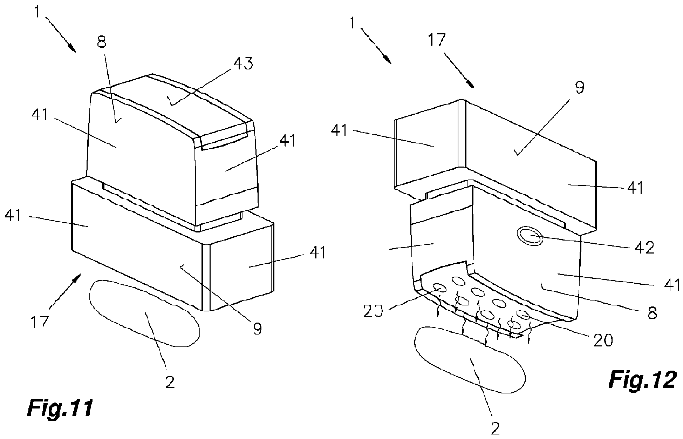

In den Fig. 11 und 12 ist ein weiteres Ausführungsbeispiels eines Stempels 1 gezeigt, wobei nunmehr ein sogenannter Flash-Stempel 1 zum Einsatz kommt, bei dem die Farbe 5 durch die Textplatte 3 hindurch sickert und somit ein Stempelabdruck 2 erzeugt werden kann, wobei auf die detaillierte Ausbildung des Stempel 1 und dessen Funktionsweise nicht näher eingegangen wird, da hierzu bereits eine Vielzahl an der derartigen System bekannt sind.

Bei dieser Variante sind die Strahlenquellen 20 am Stempel 1 vorzugsweise am Oberteil 8 oder an Seitenflächen 41 zum manuellen Ausrichten zur Abdruckfläche 17 angeordnet, d.h., dass zuerst der Stempelabdruck 2 gemäß Fig. 11 erzeugt wird, anschließend der Stempel 1 umgedreht wird, gemäß Fig. 12, und beispielsweise durch Aktivieren eines Tasters 42 die Leuchtquellen 20, die manuell in Richtung des Stempelabdruckes 2 gerichtet sind, eingeschaltet wird, wobei die Steuerung 20 die Kontrolle über die Zeitdauer durchführt.

Weiters ist aus dem Ausführungsbeispiel zu entnehmen, dass die Leuchtquellen 20 auf der Oberseite des Oberteil 8, insbesondere unterhalb einer Abdeckhaube 43 angeordnet sind, sodass die Leuchtquellen 20 vor Verschmutzung geschützt sind. Der Ordnungshalber wird jedoch darauf hingewiesen, dass die Leuchtquellen 20 auch freiliegend angebracht sein können oder das diese in einer Vertiefung eingebettet sind, sodass der Stempel 1 über den Stempelabdruck 2 aufgestellt werden kann und beim Aktivieren der Leuchtquellen 20 diese den Aushärteprozess startet.

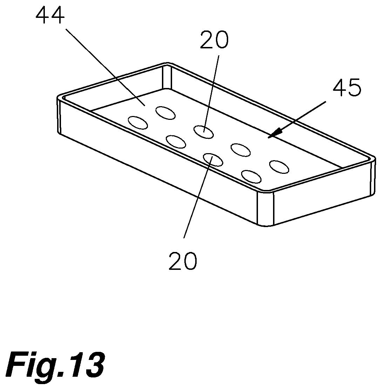

Eine weitere Möglichkeit der Anordnung der Leuchtquellen 20 ist in Fig. 13 gezeigt, bei dem die Leuchtquellen 20 in einer Verschlußkappe 44 des Stempels 1 angeordnet ist. Vorzugsweise werden die Leuchtquellen 20 im Innenbereich 45 angeordnet, sodass die Verschlußkappe 44 einfach über den Stempelabdruck 2 gestellt werden kann und mit dem auf der der Leuchtquellen 20 gegenüberliegenden Seite angeordnete Taster 42 (nicht ersichtlich) die Leuchtquellen 20 eingeschaltet werden können. Selbstverständlich ist auch möglich, die Leuchtquellen 20 auf der Außenseite der Verschlußkappe 44 anzuordnen.

Durch die Verwendung der Zusatzkomponente des Stempels 1 ist es möglich, dass einfach die Steuerung 20 und die Energiequelle 23 sowie weitere Zusatzkomponenten wie die Schnittstelle 29 darin integriert sind, da ausreichen Platz zur Aufnahme der Komponenten vorhanden ist.

Erfindungsgemäß ist es somit möglich, dass ein Verfahren bzw. Ablauf zum Erzeugen eines Stempelabdruck 2 mit aushärtbarer Farbe 5 geschaffen wird, bei dem die Textplatte 3 mit dem negativen Stempelabdruck 2 von einer Ruhestellung 12 in eine Stempelstellung 13 bewegt wird, wodurch in der Stempelstellung 12 der Stempelabdruck 2 mit der Farbe 5 auf einer vorzugsweise glatten Oberfläche 16a eines Dokumente 16 oder Gegenstandes 16 oder Werkstückes 16 erzeugt wird, und anschließend die Textplatte 3 wieder in die Ruhestellung 12 zurück gestellt wird, wobei eine Steuerung 22 aktiviert wird, wobei nach der Erzeugung des Stempelabdrucks 2 der Stempel 1 oder eine Zusatzkomponente des Stempels 1, insbesondere eine Verschlußkappe 44, mit daran angeordneten Leuchtquellen 20 manuell zum Stempelabdruck 2 ausgerichtet wird und die Leuchtquellen 20 zum Bestrahlen des Stempelabdruckes 2 aktiviert werden.

Weiters ist es möglich, dass noch zusätzlich sicherungstechnische Maßnahmen im Stempel 1 integriert sein können. Beispielsweise kann ein oder mehrere, insbesondere vier Schaltelemente oder Kontaktschalter bei den Rutschsicherungen 18 eingebaut sein, sodass beim Aufstellen des Stempels 1 auf einen Gegenstand 16, Werkstück 16 oder Dokument 16 diese aktiviert oder deaktiviert werden und somit einen uv-aushärtbaren Stempelprozess freigeben. Dadurch wird verhindert, dass beim Zusammendrücken des Stempels 1 in der Luft durch einen Nutzer ungewollt eine Aktivierung der Strahlenquelle 20 erfolgt, da der Stempel 1 auf einen Gegenstand 16, Werkstück 16 oder Dokument 16 aufgestellt sein muss.

Weiters ist auch eine indirekte Bestrahlung (nicht dargestellt) des Stempelabdruckes 2 mit den UV-Strahlen 19 möglich, bei denen die Strahlenquelle 2 nicht direkt in Richtung des Stempelabdruckes 2 ausgerichtet sind, sondern die Strahlen 19 von einem Leitelemente aufgenommen werden und anschließend derart umgelenkt bzw. transportiert werden, dass die Strahlen beim Austritt aus dem Leitelement in Richtung der Abdruckfläche 17 bzw. des Stempelabdruckes 2 verlaufen bzw. strahlen. D. h., dass die Strahlenquelle 20 im Oberteil 8 und/oder Unterteil 9 angeordnet sind, wobei zum Bestrahlen des Stempelabdruckes 2 Leitelemente insbesondere Lichtleiter, Spiegelsystem, die die abgegebenen Strahlen, insbesondere UV-Strahlen 19, in Richtung der Abdruckfläche 17 umlenken, angeordnet sind.

Darüber hinaus ist es auch möglich, dass ein derartiges System zum Aushärten eine UV-Farbe 5 derart angewandt wird, dass in einem handelsüblichen Selbstfärbe-Stempel 1 in das Kissenaufnahmeelement 10 eine uv-aushärtenbare Farbe 5 eingefüllt wird, ohne dass der Stempel 1 die zuvor beschriebenen UV-Leuchtquellen 20 aufweist. Der User kann mit diesem ausgestatteten Stempel 1 einen Stempelabdruck 2 erzeugen. Anschließend entfernt er den Stempel 1 und beleuchtet den Stempelabdruck 2 mit eine entsprechenden Lampe, die vorzugsweise in Form einer tragbaren Taschenlampe ausgebildet ist, sodass von der Lampe die UV-Strahlen 19 ausgesendet werden und der Stempelabdruck 2 somit sofort aushärtet.

Der Ordnungshalber wird darauf hingewiesen, dass die Verschlußkappe 44 für die Selbstfärbestempel gemäß der Figuren 1 bis 10, als auch für den Flash-Stempel gemäß Fig. 11 und 12, ausgebildet sein kann, wobei diese je nach Bauform entsprechen adoptiert werden kann, wie dies aus dem Stand der Technik bekannt ist.

Der Ordnung halber sei abschließend darauf hingewiesen, dass zum besseren Verständnis Zeichnungen teilweise unmaßstäblich und/oder vergrößert und/oder verkleinert dargestellt wurden.

## Patentansprüche

1. Verfahren zum Erzeugen eines Stempelabdrucks (2) mit uv-aushärtbarer Farbe (5) mit einem vorzugsweise selbstfärbenden Stempel (1), bei dem eine Textplatte (3) mit dem negativen Stempelabdruck (2) von einer Ruhestellung (12) in eine Stempelstellung (13) bewegt wird, wodurch in der Stempelstellung (12) der Stempelabdruck (2) mit der Farbe (5) auf einer vorzugsweise glatten Oberfläche (16a) eines Dokumentes (16) oder Gegenstandes (16) oder Werkstückes (16) erzeugt wird, und anschließend die Textplatte (3) wieder in die Ruhestellung (12) zurück gestellt wird, **dadurch gekennzeichnet, dass** eine Steuerung (22) aktiviert wird, wobei zum Aushärten der Farbe (5) zumindest eine oder mehrere am Stempel (1) angeordnete Strahlenquellen (20) mit in Richtung einer Abdruckfläche (17) ausgerichtete UV-Strahlen (19) eingeschaltet wird bzw. werden.

2. Verfahren nach Anspruch 1, **dadurch gekennzeichnet, dass** die Steuerung (22) vor oder während des Stempelvorgangs aktiviert, insbesondere eingeschaltet wird, wobei die Steuerung (22) während oder unmittelbar nach dem Stempelvorgang zumindest eine oder mehrere in Richtung einer Abdruckfläche (17) des Stempels (1) ausgerichtete Strahlenquelle (20) am Stempel (1), insbesondere im Innenraum (21), zum Aushärten der Farbe (5) aktiviert, insbesondere einschaltet.

3. Verfahren nach Anspruch 1 oder 2, **dadurch gekennzeichnet, dass** die Steuerung (22) während der Rückstellung der Textplatte (3) von der Stempelstellung (13) in die Ruhestellung (12), insbesondere kurz vor dem Erreichen oder beim Erreichen der Ruhestellung (12), zumindest eine oder mehrere Strahlenquellen (20) am Stempel (1) aktiviert, bzw. einschaltet.

4. Verfahren nach einem der vorhergehenden Ansprüchen 1 bis 3, **dadurch gekennzeichnet, dass** die Abdruckeinheit (7) und/oder die Textplatte (3) derart ausgebildet wird, dass diese in der Ruhestellung (12) ein mit vorzugsweise uv-aushärtbarer Farbe (5) getränktes Kissen des eingesetzten Stempelkissen (4) abdeckt bzw. verschließt.

5. Verfahren nach einem der vorhergehenden Ansprüche 1 bis 4, **dadurch gekennzeichnet, dass** die Strahlenquelle (20) beim oder nach dem Stempelvorgang über eine Zeitdauer kleiner 2 Sekunden, vorzugsweise zwischen 0,5 und 0,1 Sekunden, aktiviert wird.

6. Verfahren nach einem der vorhergehenden Ansprüche 1 bis 5, **dadurch gekennzeichnet, dass** von der Steuerung (22) eine Position der Textplatte (3) oder des Oberteils (8) und des Unterteils (9) zueinander während des Stempelvorgangs detektiert wird, wobei insbesondere an bestimmten detektierten Positionen die Steuerung (22) und/oder die Strahlenquellen (20) aktiviert wird bzw. aktiviert werden.

7. Verfahren nach Anspruch 6, **dadurch gekennzeichnet, dass** die Detektierung der Textplatte (3) oder des Oberteils (8) und des Unterteils (9) zueinander über eine integrierte Sensorik (24), vorzugsweise kapazitiv Kondensatorplatten bzw. - Elemente (25,26) oder über Kontaktelemente oder magnetischen Schaltelemente erfolgt.

8. Verfahren nach einem oder mehreren der vorhergehenden Ansprüche 1 bis 7, **dadurch gekennzeichnet, dass** die Textplatte (3) über einen Wendemechanismus (14) von 90° oder vorzugsweise 180° von der Ruhestellung (12) in die Stempelstellung (13) geschwenkt bzw. gedreht wird, und dass zur Aufnahme der UV-aushärtbarer Farbe (5) ein Stempelkissen (4) eingesetzt wird, an dem die Textplatte (3) in der Ruhestellung (12) anliegt.

9. Verfahren nach einem oder mehreren der vorhergehenden Ansprüche 1 bis 8, **dadurch gekennzeichnet, dass** eine oder mehrere Strahlenquellen (20) im Bereich der Abdruckfläche (17) des Stempels (1), insbesondere an einem Unterteil (9) des Stempels (1), und/oder auf der Rückseite der Textplatte (7), insbesondere auf der in Richtung Aufstandsfläche (17) ragenden Seite eines Textplattenhalters und/oder an dem Unterteil (9), insbesondere der Oberseite des Innenraumes (21), befestigt wird bzw. werden, wobei die Lichtausstrahlung in Richtung der Abdruckfläche (17), insbesondere im Innenraum (21) des Unterteils (9) des Stempels (1), ausgerichtet wird.

10. Verfahren nach einem oder mehreren der vorhergehenden Ansprüche 1 bis 9, **dadurch gekennzeichnet, dass** je nach Größe der Textplatte (3) die Anzahl der verwendete Strahlenquellen (20) definiert wird, wobei hierzu deren technischen Daten berücksichtigt werden.

11. Verfahren nach einem oder mehreren der vorhergehenden Ansprüche 1 bis 10, **dadurch gekennzeichnet, dass** die Steuerung (22) nach einem Stempelvorgang innerhalb einer vorgebbaren Zeitdauer oder direkt beim Erlöschen der Strahlenquellen (20) deaktiviert wird, wobei bei einem neuerlichen Stempelvorgang innerhalb der Zeitdauer zum Deaktivieren der Steuerung (20) diese aktiviert bleibt.

12. Verfahren nach einem oder mehreren der vorhergehenden Ansprüche 1 bis 11, **dadurch gekennzeichnet, dass** die Stempelkomponenten (6), insbesondere der Unterteil (9), als UV-Schutz gegen die Augen ausgebildet ist, wobei hierzu ein transparentes Sichtfenster (27) oder bei transparenten Flächen diese als UVundurchlässige Material, insbesondere aus Polymethylmethacrylat oder Polyallyldiglycolcarbonat, verwendet wird.

13. Verfahren nach einem oder mehreren der vorhergehenden Ansprüche 1 bis 12, **dadurch gekennzeichnet, dass** die Steuerung (22), die Energiequelle (23) und zumindest eine oder mehrere Strahlenquellen (20) eine Baueinheit bzw. Modul (31) , insbesondere ein Nachrüstmodul, bilden, die an die Abdruckeinheit (7), insbesondere auf der gegenüberliegenden Seite der Textplatte (3), befestigt wird bzw. aufgesteckt wird.

14. Verfahren zum Erzeugen eines Stempelabdruck (2) mit uv-aushärtbarer Farbe (5), bei dem eine Textplatte (3) mit dem negativen Stempelabdruck (2) von einer Ruhestellung (12) in eine Stempelstellung (13) bewegt wird, wodurch in der Stempelstellung (12) der Stempelabdruck (2) mit der Farbe (5) auf einer vorzugsweise glatten Oberfläche (16a) eines Dokumentes (16) oder Gegenstandes (16) oder Werkstückes (16) erzeugt wird, und anschließend die Textplatte (3) wieder in die Ruhestellung (12) zurück gestellt wird, **dadurch gekennzeichnet, dass** eine Steuerung (22) aktiviert wird, wobei nach der Erzeugung des Stempelabdrucks (2) der Stempel (1) oder eine Zusatzkomponente des Stempels (1), insbesondere eine Verschlußkappe (44), mit daran angeordneten Leuchtquellen (20) manuell zum Stempelabdruck (2) ausgerichtet wird und die Leuchtquellen (20) zum Bestrahlen des Stempelabdruckes (2) aktiviert werden, wobei die Farbe (5) des Stempelabdruckes (2) über UV-Strahlen (19) von zumindest einer oder mehreren Leuchtquellen (20) aktiviert und ausgehärtet wird bzw. werden.

15. Verfahren nach Anspruch 14, **dadurch gekennzeichnet, dass** die Strahlenquelle (20) über eine Zeitdauer kleiner 2 Sekunden, vorzugsweise zwischen 0,5 und 0,1 Sekunden, aktiviert wird.

16. Stempel (1), umfassend zumindest eine Stempelkomponente (6) und eine Abdruckeinheit (7), wobei die Stempelkomponente (6) aus einem Oberteil (8) und einem Unterteil (9) mit einem Kissenaufnahmeelement (10) zur Aufnahme eines Stempelkissen (4) ausgebildet ist, wobei an der Abdruckeinheit (7) eine Textplatte (3) befestigt ist, und dass die Abdruckeinheit (7) bei einem Stempelvorgang von einer Ruhestellung (12) in eine Stempelstellung (13) zum Erzeugen eines aus uvaushärtenbarer Farbe (5) gebildeten Stempelabdruck (2) und wieder zurück in die Ruhestellung (12) verstellbar ist, **dadurch gekennzeichnet, dass** in bzw. an der Stempelkomponente (6) eine Steuerung (22) mit daran verbundener Energiequelle (23), insbesondere eine wiederaufladbare Knopfzelle oder Akku, angeordnet ist, die über Leitungen mit zumindest einer oder mehreren an der Stempelkomponente (6) angeordnete Strahlenquellen (20) verbunden ist.

17. Stempel (1) nach Anspruch 16, **dadurch gekennzeichnet, dass** die Strahlenquellen (20) derart angeordnet sind, dass deren UV-Strahlen (19) in Richtung einer Abdruckfläche (17) bzw. dem erzeugten Stempelabdruck (2) ausgerichtet sind.

18. Stempel (1) nach Anspruch 16, **dadurch gekennzeichnet, dass** die Strahlenquellen (20) am Stempel (1) vorzugsweise am Oberteil (8) oder an den Seitenflächen (41) zum manuellen Ausrichten zur Abdruckfläche (17) angeordnet sind.

19. Stempel (1) nach einem der vorhergehenden Ansprüchen 16 bis 18, **dadurch gekennzeichnet, dass** die uv-aushärtbare Farbe (5) in einem auswechselbaren Stempelkissen (4), insbesondere in einem getränkten Kissen, angeordnet ist, wobei in der Ruheposition (12) bei eingeschobenen Stempelkissen (4) die Textplatte (3) zur Aufnahme der uv-aushärtbaren Farbe (5) am Kissen anliegt.

20. Stempel (1) nach einem der vorhergehenden Ansprüchen 16 bis 19, **dadurch gekennzeichnet, dass** die Textplatte (3) bei einem Stempelvorgang zum Erzeugen des Stempelabdruckes (2) in der Stempelposition (13) die Abdruckeinheit (7) mit der Textplatte (3) über einen Wendemechanismus (14) um in etwa 180° oder 90° von der Ruhestellung (12) in die Stempelstellung (13) verstellbar ist.

21. Stempel (1) nach einem der vorhergehenden Ansprüche 16 bis 20, **dadurch gekennzeichnet, dass** auf einer Oberseite des Unterteil (9) die Energiequelle (23) und die Steuerung (20) angeordnet sind, wobei die Strahlenquellen (20) im Bereich einer Abdruckfläche (17) bzw. Aufstandsfläche (17a) an einer oder mehreren Flächen des Unterteils (9) befestigt sind, wobei die Strahlenquelle (20) bzw. Strahlenquellen (20) in Richtung eines Innenraums (21), insbesondere der Abdruckfläche (17) ausgerichtet ist bzw. sind.

22. Stempel (1) nach einem der vorhergehenden Ansprüche 16 bis 21, **dadurch gekennzeichnet, dass** zumindest eine oder mehrere Strahlenquellen (20) auf der gegenüberliegenden Seite der Textplatte (3), insbesondere an der Abdruckeinheit (7) bzw. Textplattenhalter, angeordnet ist bzw. sind, wobei die Steuerung (22) und die Energiequelle (23) ebenfalls an der Abdruckeinheit (7) angeordnet sind.

23. Stempel (1) nach einem der vorhergehenden Ansprüchen 16 bis 22, **dadurch gekennzeichnet, dass** die einzelnen Komponenten für die Aushärtung der Farbe (5), insbesondere die Strahlenquellen (20), die Steuerung (22), die Energiequelle (23) in einem gemeinsamen Gehäuse zur Bildung eines Moduls (31) angeordnet sind, welches auswechselbar mit der Abdruckeinheit (7) verbindbar ist.

24. Stempel () nach einem der vorhergehenden Ansprüche 16 bis 23, **dadurch gekennzeichnet, dass** über der oder den Strahlenquellen (20) eine transparente auswechselbare Schutzabdeckung (32) angeordnet ist, die vorzugsweise gleichzeitig als Linse (33), insbesondere Zerstreuungslinse, zur besseren Verteilung der UV-Strahlen (19) im Innenraum (21) ausgebildet ist.

25. Stempel (1) nach einem der vorhergehenden Ansprüche 16 bis 24, **dadurch gekennzeichnet, dass** zumindest eine oder mehrere Strahlenquellen (20) auf der gegenüberliegenden Seite der Textplatte (3), insbesondere an der Abdruckeinheit (7) bzw. Textplattenhalter, angeordnet ist bzw. sind, wobei die Steuerung (22) und die Energiequelle (23) am Oberteil oder Unterteil oder ebenfalls am Textplattenhalter angeordnet sind.

26. Stempel (1) nach einem der vorhergehenden Ansprüche 16 bis 25, **dadurch gekennzeichnet, dass** die Strahlenquelle (20) im Oberteil (8) und/oder Unterteil (9) angeordnet ist, wobei zum Bestrahlen des Stempelabdruckes (2) Leitelemente insbesondere Lichtleiter oder ein Spiegelsystem, die bzw. das die abgegebenen Strahlen, insbesondere UV-Strahlen (19), in Richtung Abdruckfläche (17) umlenken, angeordnet sind.

## Claims

1. Method for producing a stamp impression (2) with UV-curable ink (5) with a preferably self-inking stamp (1) and a stamp for this purpose, in which a text plate (3) with the negative stamp impression (2) is moved from a resting position (12) into a stamping position (13), whereby in the stamping position (12) the stamp impression (2) with the ink (5) is produced on a preferably smooth surface (16a) of a document (16) or object (16) or workpiece (16), and then the text plate (3) is returned to the resting position (12), **characterised in that** a controller (22) is activated, wherein for the curing of the ink (5) at least one or several irradiation sources (20) arranged on the stamp (1) is or are, respectively, switched on with UV rays (19) aligned in the direction of a printing surface (17).

2. Method according to claim 1, **characterised in that** the controller (22) is activated, in particular switched on, before or during the stamping process, wherein the controller (22) activates, in particular switches on, during or immediately after the stamping process, at least one or several irradiation sources (20) aligned in the direction of a printing surface (17) of the stamp (1) on the stamp (1), in particular in the interior space (21), for the curing of the ink (5).

3. Method according to claim 1 or 2, **characterised in that** during the return movement of the text plate (3) from the stamping position (13) to the resting position (12), in particular shortly before or upon reaching the resting position (12), the controller (22) activates or switches on, respectively, at least one or several irradiation sources (20) on the stamp (1).

4. Method according to one of the preceding claims 1 to 3, **characterised in that** the stamping insert (7) and/or the text plate (3) is formed in such a way that in the resting position (12) it covers or closes, respectively, a pad of the inserted ink cartridge with pad (4) that is impregnated with preferably UV-curable ink (5).

5. Method according to one of the preceding claims 1 to 4, **characterised in that** the irradiation source (20) is activated during or after the stamping process for a period of less than 2 seconds, preferably between 0.5 and 0.1 seconds.

6. Method according to one of the preceding claims 1 to 5, **characterised in that** a position of the text plate (3) or the top part (8) and the bottom part (9) relative to each other is detected by the controller (22) during the stamping process, wherein the controller (22) and/or the irradiation sources (20) is or are, respectively, activated in particular at certain detected positions.

7. Method according to claim 6, **characterised in that** the detection of the text plate (3) or the top part (8) and the bottom part (9) relative to each another takes place via an integrated sensor system (24), preferably capacitively capacitor plates or elements (25, 26), or via contact elements or magnetic switching elements.

8. Method according to one or several of the preceding claims 1 to 7, **characterised in that** the text plate (3) is swivelled or rotated, respectively, by 90° or preferably 180° from the resting position (12) into the stamping position (13) via a reversing mechanism (14), and **in that** an ink cartridge with pad (4), against which the text plate (3) abuts in the resting position (12), is used to hold the UV-curable ink (5).

9. Method according to one or several of the preceding claims 1 to 8, **characterised in that** one or a plurality of irradiation sources (20) is or are attached, respectively, in the area of the printing surface (17) of the stamp (1), in particular on a bottom part (9) of the stamp (1), and/or on the rear side of the text plate (7), in particular on the side of a text plate holder projecting in the direction of the contact area (17), and/or on the bottom part (9), in particular on the upper side of the interior space (21), wherein the light emission is aligned in the direction of the printing surface (17), in particular in the interior space (21) of the bottom part (9) of the stamp (1).

10. Method according to one or several of the preceding claims 1 to 9, **characterised in that**, depending on the size of the text plate (3), the number of irradiation sources (20) used is defined, taking into account their technical data.

11. Method according to one or several of the preceding claims 1 to 10, **characterised in that** the controller (22) is deactivated after a stamping process within a predeterminable time period or directly when the irradiation sources (20) go dark, wherein the controller (22) remains activated during a new stamping process within the time period for deactivating it.

12. Method according to one or several of the preceding claims 1 to 11, **characterised in that** the stamping components (6), in particular the bottom part (9), are designed as UV protection against the eyes, wherein a transparent viewing window (27) is used for this purpose or, in the case of transparent surfaces, these are formed from UV-impermeable material, in particular polymethyl methacrylate or polyallyldiglycol carbonate.

13. Method according to one or several of the preceding claims 1 to 12, **characterised in that** the controller (22), the energy source (23) and at least one or a plurality of irradiation sources (20) form a unit or module (31), in particular a retrofit module, that is attached to or plugged onto, respectively, the stamping insert (7), in particular on the opposite side of the text plate (3).

14. Method for producing a stamp impression (2) with UV-curable ink (5), in which a text plate (3) with the negative stamp impression (2) is moved from a resting position (12) into a stamping position (13), whereby in the stamping position (12) the stamp impression (2) with the ink (5) is produced on a preferably smooth surface (16a) of a document (16) or object (16) or workpiece (16), and then the text plate (3) is returned to the resting position (12), **characterised in that** a controller (22) is activated, wherein the stamp (1) or an additional component of the stamp (1), in particular a protective cap (44), with light sources (20) arranged thereon, is manually aligned with the stamp impression (2) after the stamp impression (2) has been generated, and the light sources (20) are activated for irradiating the stamp impression (2), wherein the ink (5) of the stamp impression (2) is activated and cured by UV radiation (19) from at least one or several light sources (20).

15. Method according to claim 14, **characterised in that** the irradiation source (20) is activated for a period of less than 2 seconds, preferably between 0.5 and 0.1 seconds.

16. Stamp (1), comprising at least one stamping component (6) and one stamping insert (7), wherein the stamping component (6) is formed from a top part (8) and a bottom part (9) with a cushion-receiving element (10) for receiving an ink cartridge with pad (4), wherein a text plate (3) is fastened to the stamping insert (7), and during a stamping process, the stamping insert (7) can be shifted from a resting position (12) into a stamping position (13) for producing a stamp impression (2) formed from UV-curable ink (5) and back again into the resting position (12), **characterised in that** a controller (22) with an energy source (23) connected thereto, in particular a rechargeable button cell or battery, is arranged in or on, respectively, the stamping component (6) and is connected via leads to at least one or several irradiation sources (20) provided on or at the stamping component (6).

17. Stamp (1) according to claim 16, **characterised in that** the irradiation sources (20) are arranged in such a way that their UV rays (19) are aligned in the direction of an printing surface (17) or the generated stamp impression (2), respectively.

18. Stamp (1) according to claim 16, **characterised in that** the irradiation sources (20) on the stamp (1) are preferably arranged on the top part (8) or on the side surfaces (41) for manual alignment with the printing surface (17).

19. Stamp (1) according to one of the preceding claims 16 to 18, **characterised in that** the UV-curable ink (5) is provided in an exchangeable ink cartridge with pad (4), in particular in an impregnated pad, wherein the text plate (3) for receiving the UV-curable ink (5) abuts against the pad in the resting position (12) when the ink cartridge with pad (4) is inserted.

20. Stamp (1) according to one of the preceding claims 16 to 19, **characterised in that** the text plate (3), during a stamping process for generating the stamp impression (2) in the stamping position (13), the stamping insert (7) with the text plate (3) can be adjusted by approximately 180° or 90° from the resting position (12) into the stamping position (13) via a reversing mechanism (14).

21. Stamp (1) according to one of the preceding claims 16 to 20, **characterised in that** the energy source (23) and the controller (20) are provided on an upper side of the bottom part (9), wherein the irradiation sources (20) are attached to one or several surfaces of the bottom part (9) in the area of a printing surface (17) or contact area (17a), the irradiation source (20) or irradiation sources (20), respectively, being aligned in the direction of an interior space (21), in particular the printing surface (17).

22. Stamp (1) according to one of the preceding claims 16 to 21, **characterised in that** at least one or several irradiation sources (20) are provided on the opposite side of the text plate (3), in particular on the stamping insert (7) or text plate holder, respectively, wherein the controller (22) and the energy source (23) are also arranged on the stamping insert (7).

23. Stamp (1) according to one of the preceding claims 16 to 22, **characterised in that** the individual components for the curing of the ink (5), in particular the irradiation sources (20), the controller (22), the energy source (23), etc., are arranged in a common housing to form a module (31) that can be connected with the stamping insert (7) in a manner that allows replacement.

24. Stamp (1) according to one of the preceding claims 16 to 23, **characterised in that** a transparent, replaceable protective cover (32) is provided above the irradiation source or irradiation sources (20) and is preferably formed simultaneously as a lens (33), in particular a diffusing lens, for better distribution of the UV rays (19) in the interior space (21).

25. Stamp (1) according to one of the preceding claims 16 to 24, **characterised in that** at least one or a plurality of irradiation sources (20) is arranged on the opposite side of the text plate (3), in particular on the stamping insert (7) or text plate holder, respectively, wherein the controller (22) and the energy source (23) are arranged on the top part or bottom part or likewise on the text plate holder.

26. Stamp (1) according to one of the preceding claims 16 to 25, **characterised in that** the irradiation source (20) is provided in the top part (8) and/or bottom part (9), wherein guiding elements, in particular light guides or a mirror system deflecting the emitted rays, in particular UV rays (19), in the direction of the printing surface (17), are provided for irradiating the stamp impression (2).

## Revendications

1. Procédé permettant de produire une empreinte de tampon (2) à l'aide d'encre durcissable par UV (5) au moyen d'un tampon de préférence à encrage automatique (1), au cours duquel une plaque-texte (3) avec l'empreinte de tampon (2) négative est déplacée d'une position de repos (12) en position d'encrage (13), l'empreinte de tampon (2) est ainsi produite en position d'encrage (12) avec l'encre (5) sur une surface (16a) de préférence lisse d'un document (16), d'un objet (16) ou d'une pièce (16) et la plaque-texte (3) retourne ensuite en position de repos (12), **caractérisé en ce qu'**une commande (22) est activée, au moins une ou plusieurs sources de rayonnement (20) disposées sur le tampon (1) avec rayons UV (19) orientés en direction d'une surface d'empreinte (17) étant activées en vue du durcissement de l'encre (5).

2. Procédé selon la revendication 1, **caractérisé en ce que** la commande (22) est activée, en particulier enclenchée, avant ou pendant le processus d'impression, la commande (22) activant, en particulier enclenchant, pendant ou directement après le processus d'impression au moins une ou plusieurs sources de rayonnement (20) sur le tampon (1) en direction d'une surface d'empreinte (17) du tampon (1), en particulier dans le compartiment intérieur (21) en vue du durcissement de l'encre (5).

3. Procédé selon la revendication 1 ou 2, **caractérisé en ce que** la commande (22) active ou enclenche, pendant le retour de la plaque-texte (3) de la position d'encrage (13) en position de repos (12), au moins une ou plusieurs sources de rayonnement (20) sur le tampon (1), en particulier juste avant d'atteindre la position de repos (12).

4. Procédé selon l'une des revendications précédentes 1 à 3, **caractérisé en ce que** l'unité d'empreinte (7) et/ou la plaque-texte (3) est ou sont conçues de manière à ce que cette ou ces dernières recouvrent ou obturent, en position de repos (12), une cassette d'encrage (4) imbibée d'encre de préférence durcissable par UV (5).

5. Procédé selon l'une des revendications précédentes 1 à 4, **caractérisé en ce que** la source de rayonnement (20) est activée, pendant ou après le processus d'impression, pendant une durée inférieure à 2 secondes, de préférence comprise entre 0,5 et 0,1 seconde.

6. Procédé selon l'une des revendications précédentes 1 à 5, **caractérisé en ce que** la commande (22) détecte une position de la plaque-texte (3) ou de la partie supérieure (8) et de l'embase (9) l'une par rapport à l'autre pendant le processus d'impression, la commande (22) et/ou les sources de rayonnement (20) étant activées en particulier à certaines positions détectées.

7. Procédé selon la revendication 6, **caractérisé en ce que** la détection de la plaque-texte (3) ou de la partie supérieure (8) et de l'embase (9) l'une par rapport à l'autre est réalisée par des capteurs intégrés (24), de préférence des plaques ou éléments de condensateur capacitif (25,26) ou par le biais d'éléments de contact ou d'éléments magnétiques de commutation.

8. Procédé selon une ou plusieurs des revendications précédentes 1 à 7, **caractérisé en ce que** la plaque-texte (3) est basculée ou tournée par le biais d'un mécanisme de retournement (14) de 90° ou de préférence de 180° de la position de repos (12) en position d'encrage (13) et qu'une cassette d'encrage (4), contre laquelle la plaque-texte (3) repose en position de repos (12), est employée en vue de l'absorption de l'encre durcissable par UV (5).

9. Procédé selon une ou plusieurs des revendications précédentes 1 à 8, **caractérisé en ce qu'**une ou plusieurs sources de rayonnement (20) sont fixées dans la zone de la surface d'empreinte (17) du tampon (1), en particulier sur une embase (9) du tampon (1), et/ou sur la face arrière de la plaque-texte (7), en particulier sur la face d'un support de plaque-texte dépassant en direction de la surface de contact (17) et/ou sur l'embase (9), en particulier de la face supérieure du compartiment intérieur (21), le rayonnement de lumière étant orienté en direction de la surface d'empreinte (17), en particulier dans le compartiment intérieur (21) de l'embase (9) du tampon (1).

10. Procédé selon une ou plusieurs des revendications précédentes 1 à 9, **caractérisé en ce que** le nombre de sources de rayonnement (20) employées est défini en fonction de la taille de la plaque-texte (3), les caractéristiques techniques des sources de rayonnement étant prises en compte à cet effet.

11. Procédé selon une ou plusieurs des revendications précédentes 1 à 10, **caractérisé en ce que** la commande (22) est désactivée après un processus d'impression en l'espace d'une durée prédéfinissable ou directement après l'extinction des sources de rayonnement (20), la commande restant activée en cas de nouveau processus d'impression avant expiration de la durée définie en vue de la désactivation de la commande (20).

12. Procédé selon une ou plusieurs des revendications précédentes 1 à 11, **caractérisé en ce que** les composants de tampon (6), en particulier l'embase (9), sont conçus sous forme de protection contre les UV pour les yeux, un hublot (27) transparent ou, avec des surfaces transparentes, un matériau étanche aux UV, en particulier en polyméthacrylate de méthyle ou en carbonate de poly-allyldiglycol, étant employés à cet effet.

13. Procédé selon une ou plusieurs des revendications précédentes 1 à 12, **caractérisé en ce que** la commande (22), la source d'énergie (23) et au moins une ou plusieurs sources de rayonnement (20) forment une unité modulaire ou module (31), en particulier un module de rééquipement, qui se fixe ou s'emboîte sur l'unité d'empreinte (7), en particulier sur la face opposée à la plaque-texte (3).

14. Procédé pour la production d'une empreinte de tampon (2) à l'aide d'encre durcissable par UV (5), au cours duquel une plaque-texte (3) avec l'empreinte de tampon (2) négative est déplacée d'une position de repos (12) en position d'encrage (13), l'empreinte de tampon (2) est ainsi produite en position d'encrage (12) avec l'encre (5) sur une surface (16a) de préférence lisse d'un document (16), d'un objet (16) ou d'une pièce (16) et la plaque-texte (3) retourne ensuite en position de repos (12), **caractérisé en ce qu'**une commande (22) est activée, le tampon (1) ou un composant supplémentaire du tampon (1), en particulier un capuchon de fermeture (44), sur lequel les sources lumineuses (20) sont disposées, étant orienté, après la production de l'empreinte de tampon (2), manuellement par rapport à l'empreinte de tampon (2) et les sources lumineuses (20) activées en vue de l'irradiation de l'empreinte de tampon (2), l'encre (5) de l'empreinte de tampon (2) étant activée et durcie par le biais de rayons UV (19) diffusés par au moins une ou plusieurs sources lumineuses (20).

15. Procédé selon la revendication 14, **caractérisé en ce que** la source de rayonnement (20) est activée pendant une durée inférieure à 2 secondes, de préférence comprise entre 0,5 et 0,1 seconde.

16. Tampon (1), constitué au moins d'un composant de tampon (6) et d'une unité d'empreinte (7), le composant de tampon (6) étant constitué d'une partie supérieure (8) et d'une embase (9) avec un élément prévu pour accueillir la cassette d'encrage (10) en vue de la fixation de la cassette d'encrage (4), une plaque-texte (3) étant fixée sur l'unité d'empreinte (7) et l'unité d'empreinte (7) pouvant être déplacée, au cours d'un processus d'impression, d'une position de repos (12) dans une position d'encrage (13) en vue de la production d'une empreinte de tampon (2) constituée d'encre durcissable par UV (5) puis à nouveau en position de repos (12), **caractérisé en ce qu'**une commande (22) avec source d'énergie directement raccordée (23), en particulier une pile bouton ou batterie rechargeable, est disposée dans ou sur le composant de tampon (6) et raccordée par le biais de câbles à au moins une ou plusieurs sources de rayonnement (20) disposées sur le composant de tampon (6).

17. Tampon (1) selon la revendication 16, **caractérisé en ce que** les sources de rayonnement (20) sont disposées de manière à ce que leurs rayons UV (19) soient orientés en direction d'une surface d'empreinte (17) ou d'une empreinte de tampon (2) produite.

18. Tampon (1) selon la revendication 16, **caractérisé en ce que** les sources de rayonnement (20) sur le tampon (1) sont disposées de préférence sur la partie supérieure (8) ou sur les surfaces latérales (41) en vue de l'orientation manuelle par rapport à la surface d'empreinte (17).

19. Tampon (1) selon l'une des revendications précédentes 16 à 18, **caractérisé en ce que** l'encre durcissable par UV (5) est disposée dans une cassette d'encrage (4) interchangeable, en particulier dans une cassette d'encrage imbibée, la plaque-texte (3) reposant en vue de l'absorption de l'encre durcissable par UV (5) contre la cassette d'encrage en position de repos (12) lorsque la cassette d'encrage (4) est insérée.

20. Tampon (1) selon l'une des revendications précédentes 16 à 19, **caractérisé en ce que** la plaque-texte (3) peut être déplacée au cours d'un processus d'impression en vue de la production de l'empreinte de tampon (2) en position d'encrage (13), l'unité d'empreinte (7) avec la plaque-texte (3) par le biais d'un mécanisme de retournement (14) d'environ 180° ou 90° de la position de repos (12) en position d'encrage (13).

21. Tampon (1) selon l'une des revendications précédentes 16 à 20, **caractérisé en ce que** la source d'énergie (23) et la commande (20) sont disposées sur une face supérieure de l'embase (9), les sources de rayonnement (20) dans la zone d'une surface d'empreinte (17) ou surface de contact (17a) étant fixées à une ou plusieurs surfaces de l'embase (9), la source de rayonnement (20) ou les sources de rayonnement (20) étant orientées en direction d'un compartiment intérieur (21), en particulier de la surface d'empreinte (17).

22. Tampon (1) selon l'une des revendications précédentes 16 à 21, **caractérisé en ce qu'**au moins une ou plusieurs sources de rayonnement (20) sont disposées sur la face opposée à la plaque-texte (3), en particulier sur l'unité d'empreinte (7) ou sur le support de plaque-texte, la commande (22) et la source d'énergie (23) étant également disposées sur l'unité d'empreinte (7).

23. Tampon (1) selon l'une des revendications précédentes 16 à 22, **caractérisé en ce que** les différents composants pour le durcissement de l'encre (5), en particulier les sources de rayonnement (20), la commande (22), la source d'énergie (23), etc., sont disposés dans un boîtier commun en vue de la formation d'un module (31) pouvant être raccordé de manière interchangeable avec l'unité d'empreinte (7).

24. Tampon (1) selon l'une des revendications précédentes 16 à 23, **caractérisé en ce qu'**un couvercle de protection (32) transparent interchangeable est disposé au-dessus de la ou des sources de rayonnement (20), simultanément conçues de préférence sous forme de lentille (33), en particulier de lentille divergente, pour une meilleure distribution des rayons UV (19) dans le compartiment intérieur (21).

25. Tampon (1) selon l'une des revendications précédentes 16 à 24, **caractérisé en ce qu'**au moins une ou plusieurs des sources de rayonnement (20) sont disposées sur la face opposée à la plaque-texte (3), en particulier sur l'unité d'empreinte (7) ou le support de plaque-texte, la commande (22) et la source d'énergie (23) étant disposées sur la partie supérieure ou embase ou également sur le support de plaque-texte.

26. Tampon (1) selon l'une des revendications précédentes 16 à 25, **caractérisé en ce que** la source de rayonnement (20) est disposée dans la partie supérieure (8) et/ou embase (9), des éléments de guidage, en particulier des conducteurs optiques ou un système de miroirs, qui renvoient le ou les rayons diffusés, en particulier des rayons UV (19), en direction de la surface d'empreinte (17), étant disposés en vue de l'irradiation de l'empreinte de tampon (2).
